# EUROPEAN PATENT SPECIFICATION

(11) **EP 1 882 964 B1**
(45) Date of publication and mention of the grant of the patent: **08.12.2010**
(21) Application number: 07014716.0
(22) Date of filing: 26.07.2007
(51) Int. Cl.: G02B 6/42, G02B 6/43

(54) **Optical connecting parts and optical connecting structure**
Optische Verbindungsteile und optische Verbindungsstruktur
Pièces de connexion optique et structure de connexion optique

(30) Priority: 26.07.2006 JP 2006203140; 15.11.2006 JP 2006308613; 24.11.2006 JP 2006316984; 26.06.2007 JP 2007167225
(43) Date of publication of application: 30.01.2008
(73) Proprietor: Tomoegawa Co., Ltd., Tokyo 104-8335 (JP)
(72) Inventor: Sasaki, Kyouichi, Suruga-ku Shizuoka-shi Shizuoka 421-0192 (JP)
(74) Representative: Eisenführ, Speiser & Partner

(56) References cited:
- WO-A-00/28362
- WO-A-99/54762
- GB-A- 2 052 785
- US-A- 6 116 791
- US-B1- 6 293 711
- US-B1- 6 309 113

## Description

### BACKGROUND OF THE INVENTION

### Technical Field

The present invention relates to optical connecting parts and to an optical connecting structure.

### Background Art

Conventionally, an optical connecting structure having an optical transmission medium has been used to connect optical connecting parts on a substrate. As the optical connecting structure, a structure may be mentioned which is parallel to the substrate, in which an optical fiber, which is one type of optical transmission medium, is attached on a ferrule, and it is brought into contact with optical functional part in a face-to-face condition along the substrate; and a structure which is vertical relative to the substrate, in which a tip of an optical fiber is obliquely cut and is brought into contact with optical functional part having a connecting point which is an open part which is vertical to the substrate.

In the optical connecting structure which is parallel to the substrate, an optical connector or the like having a housing or ferrule is generally used, and the connection can be reliably completed by aligning its position and then contacting in a face-to-face manner. However, there is a problem in that the housing or the ferrule may occupy a large area of the substrate.

In the optical structure that is vertical to the substrate, processing of the optical transmission medium is difficult, and furthermore, there are no methods for effective alignment. Therefore, it is difficult to reliably complete the connection, and for example; during contact of the optical functional part and the optical fiber, the optical functional part may be damaged.

It is also possible to optically connect in a non-contact condition by using a reflective layer such as a lens. However, in that case, the number of parts may be increased, and it may take longer to align the reflective layer and the optical functional part and the optical transmission medium. As a result, the cost may be increased (see Japanese Unexamined Patent Application Publication No. Hei 09 (1997)-26515).

US-A-6,116,791 discloses, in conformity with the preamble of claim 1, an optical connecting structure between an optical fiber ribbon and an active device, for example a vertical cavity surface emitting laser. The known structure includes a holding part for the fibers in form of a fiber retainer and an aligning part consisting of a bent fiber guide and a flexure by means of which the fibers are pressed against a pressing wall of the fiber guide.

### SUMMARY OF THE INVENTION

The present invention was completed in view of the above circumstances, and an object of the present invention as covered by the features of claim 1 is to provide optical connecting parts and an optical connecting structure in which a large area is not occupied on the substrate, position aligning is easier, the number of parts is small, it takes less time to connect, and connecting and releasing can be freely performed.

The present invention solves the above-described problems by the following technical aspects.
(1) Optical connecting parts which connect an optical transmission medium and optical functional part or another optical transmission medium vertically, has a connecting member having a convex part and a connecting member having a concave part, the connecting member having the convex part has a holding part in which the optical transmission medium is aligned and is held, the connecting member having the concave part has an aligning part in which the optical functional part or other optical transmission medium is aligned, and the connecting member having the convex part and the connecting member having the concave part can be freely connected and disconnected by engaging the convex part and the concave part.
(2) Optical connecting parts according to the above-described (1), the connecting member having the convex part has a cam structure holding the optical transmission medium.
(3) Optical connecting parts according to the above-described (1), the connecting member having concave part has a pressing part pressing the connecting member having convex part.
(4) Optical connecting parts which connect an optical transmission medium and optical functional part or another optical transmission medium, has a holding part holding the optical transmitting medium, an aligning part in which the optical functional part or other optical transmission medium is aligned, a pressing device, and a pressing wall; and the pressing device presses the optical transmission medium against the pressing wall to align the optical transmission medium to the aligning part.
(5) Optical connecting parts according to the above-described (4), in which the direction of the connection is vertical to the optical axis of the optical transmission medium.
(6) Optical connecting parts according to the above-described (4), in which the pressing device presses the optical transmission medium against the pressing wall to shape the optical transmission medium.
(7) Optical connecting parts according to the above-described (4) or (6), the pressing device is a cam structure.
(8) Optical connecting parts according to one of the above-described (4) to (7) which has base parts.
(9) Optical connecting parts according to one of the above-described (1) to (8) which has a housing part housing the optical functional part or other optical transmission medium.
(10) An optical connecting structure including an optical transmission medium and optical functional part or another optical transmission medium mutually connected by using the optical connecting parts according to one of the above-described (1) to (9).
(11) An optical connecting structure formed by connecting an optical transmission medium arranged on a substrate with at least one of optical functional part and another optical transmission medium, the optical transmission medium has a bent part at least on one edge, and the bent part is connected with at least one of the optical functional part and another optical transmission medium.
(12) An optical connecting structure according to the above-described (10) has the optical transmission medium having a bent part at least on one edge.
(13) An optical connecting structure according to the above-described (11) or (12) has the bent part formed by bending the optical transmission medium by 180 degrees.
(14) An optical connecting structure according to the above-described (11) or (12) has the bent part formed by bending the optical transmission medium by 90 degrees.
(15) An optical connecting structure according to the above-described (11) or (12) has a bent part at both edges of the optical transmission medium.
(16) An optical connecting structure according to the above-described (11) has the optical functional part having an optical axis vertical to the substrate.

By the present invention, optical connecting parts and an optical connecting structure can be provided in which a large area is not occupied on a substrate, aligning is easy, the number of parts is small, it takes less time to complete connecting, and connecting and disconnecting can be freely performed.

That is, in the optical connecting structure of the present invention, connection vertical to the substrate can be performed by bending the tip of the optical transmission medium, and furthermore, the condition of connecting can be maintained compactly. As a result, it is no longer necessary to control the propagating direction using a lens or the like, and it is no longer necessary to align each lens and each optical functional part or optical transmission medium.

Furthermore, an angle of an edge surface of the optical fiber and the optical functional part can be adjusted after they are contacted with each other, the amount of reflection loss would become smaller, and defects such as optical noise generation by returned light and damage to the optical functional part can be reduced.

Furthermore, the structure can be miniaturized compared to a conventional optical connecting structure since aligning of the optical transmission medium is performed near the surface of the substrate, and cost and occupied area on the substrate can be reduced since the number of parts can be reduced.

### BRIEF DESCRIPTION OF DRAWINGS

Fig. 1 is an exploded perspective view of the optical connecting structure of Embodiment 1.
Figs. 2A and 2B are drawings showing the connecting member having a convex part of Embodiment 1, Fig. 2A is a plane view, and Fig. 2B is a cross sectional view seen from line A-A.
Figs. 3A and 3B are drawings showing the connecting member having a concave part of Embodiment 1, Fig. 3A is a plane view, and Fig. 2B is a side view.
Fig. 4 is a cross sectional view showing the condition in which the connecting member having a convex part of Embodiment 1 holds the optical transmission medium.
Fig. 5 is a side view showing the condition in which the connecting member having a concave part of Embodiment 1 and the optical functional part are aligned.
Figs. 6A to 6C are side views showing the process of unifying the connecting member having a convex part of Embodiment 1 and the connecting member having a concave part, Fig. 6A is a drawing showing before unifying, Fig. 6B is a drawing during unifying, and Fig. 6C is a drawing after unifying.
Figs.7A to 7C are drawings showing the connecting member having a convex part of Embodiment 2, Fig. 7A is a plane view, Fig. 7B is a cross sectional view seen from line B-B, and Fig. 7C is a perspective view.
Fig. 8 is a cross sectional view showing the condition in which the connecting member having a convex part of Embodiment 2 holds the optical transmission medium.
Figs. 9A and 9B are drawings showing the connecting member having a convex part of Embodiment 3, Fig. 9A is a plane view, and Fig. 9B is a cross sectional view seen from line C-C.
Figs. 10A to 10C are cross sectional views showing the process of the connecting member having a convex part of Embodiment 3 holding the optical transmission medium, Fig. 10A is a drawing showing before holding, Fig. 10B is a drawing showing during holding, and Fig. 6C is a drawing showing after holding.
Fig. 11 is a side view of the optical connecting structure of Embodiment 4.
Fig. 12 is an exploded perspective view of the optical connecting structure of Embodiment 5.
Figs. 13A and 13B are drawings showing the optical connecting parts of Embodiment 5, Fig. 13A is a plane view, and Fig. 13B is a cross sectional view seen from line C-C.
Figs. 14A to 14D are cross sectional views showing the process of the optical connecting parts of Embodiment 5 holding the optical transmission medium, Fig. 14A is a drawing showing before holding, Fig. 14B is a drawing showing a condition in which the optical transmission medium is inserted, Fig. 14C is drawing showing during closing of the lid, and Fig. 14D is a drawing after holding.
Fig. 15 is a drawing showing a condition in which the optical connecting parts of Embodiment 5 are arranged on the base.
Fig. 16 is an exploded perspective view showing the optical connecting structure of Embodiment 6.
Fig. 17 is a perspective view showing the optical connecting parts of Embodiment 7.
Figs. 18A and 18B are drawings showing the optical connecting parts of Embodiment 7, Fig. 18A is a plane view, and Fig. 18B is a cross sectional view seen from line D-D.
Figs. 19 is a cross sectional view showing a condition in which the optical connecting parts of Embodiment 7 holds the optical transmission medium.
Fig. 20 is a cross sectional view showing the optical connecting structure of Embodiment 8.
Fig. 21 is a cross sectional view showing the optical connecting structure of Embodiment 9.
Fig. 22 is a perspective view showing the optical connecting structure of Embodiment 10.
Fig. 23 is a front view showing the optical connecting structure of Embodiment 10.
Fig. 24 is a perspective view showing an example of the device for taping the optical fiber core cable.
Figs. 25A and 25B are perspective views showing the process for production of the optical fiber core cable used in the optical connecting structure of Embodiment 10, Fig. 25A is a drawing showing the optical fiber core cable made into a tape, and Fig. 25B is a drawing showing the optical fiber core cable being bent.
Fig. 26 is a front view showing the optical connecting structure of Embodiment 11.
Figs. 27A to 27E are perspective views showing the process for production of the optical fiber core cable used in the optical connecting structure of Embodiment 11, Fig. 27A is a drawing showing the optical fiber core cable made into a tape, Fig. 27B is a drawing showing the optical transmission medium being bent, Fig. 27C is a drawing showing the optical transmission medium of which the tip is bent and cut off, and Figs. 27D and 27E are the optical transmission medium of another form.
Fig. 28 is a front view showing the optical connecting structure of Embodiment 12.
Fig. 29 is a front view showing the optical connecting structure of Embodiment 13.

### EXPLANATION OF REFERENCE NUMERALS

1, 1'...Optical transmission medium, 2...MT connector, 3a, 3b, 3c, 3b', 3b"... Optical transmission medium, 3, 3'... Optical fiber core cable, 4... Guide pin, 5... Printed circuit board, 6... Plastic optical fiber, 7...Tape core cable, 8, 8', 9a, 9b, 9a', 9a"... Bent part, 10... Mending tape, 16...Optical functional part, 17, 17a, 17b...Base, 18...Polyimide film, 19...Protecting part, 20...Aligning part, 100, 100a, 100b, 100'... Connecting member having convex part, 101, 101'...Convex part, 102, 102a...Holding part, 103, 103'...Hill part, 106... Axis receiving part, 107... Eccentric cam, 108... Revolving axis, 200, 200'... Connecting member having concave part, 201... Concave part; 202, 202'...Projecting part, 203, 203'...Plate part, 206, 206'...Pressing part, 300, 300a, 300b, 300c, 300'...Optical connecting parts, 301, 301'... Shoulder part, 302, 302b, 302'...Holding part, 303, 303'...Hill part, 317a, 317b...base part, 350, 350'...Lid, 351, 351'...Revolving axis, 401w to 410z...Optical fiber core cable, 404... Coating material start point, 405... Coating material end point, 407... Adhesive tape, 408... Dispenser, 409... One axis control robot, 410... Substrate, 411... Ball screw, 412...Movable unit, 413...Pipe, 414...Driving axis, 415... Axis receiving part, C... Cutout part, H... Aligning part, L... Light, S... Housing part, T...Bowed part, W... Wall for pressing

### PREFERRED EMBODIMENTS OF THE INVENTION

Next, embodiments of the invention are explained in detail by way of drawings. In the following drawings, each graphic scale is different according to each component part to facilitate showing the component parts in the drawings.

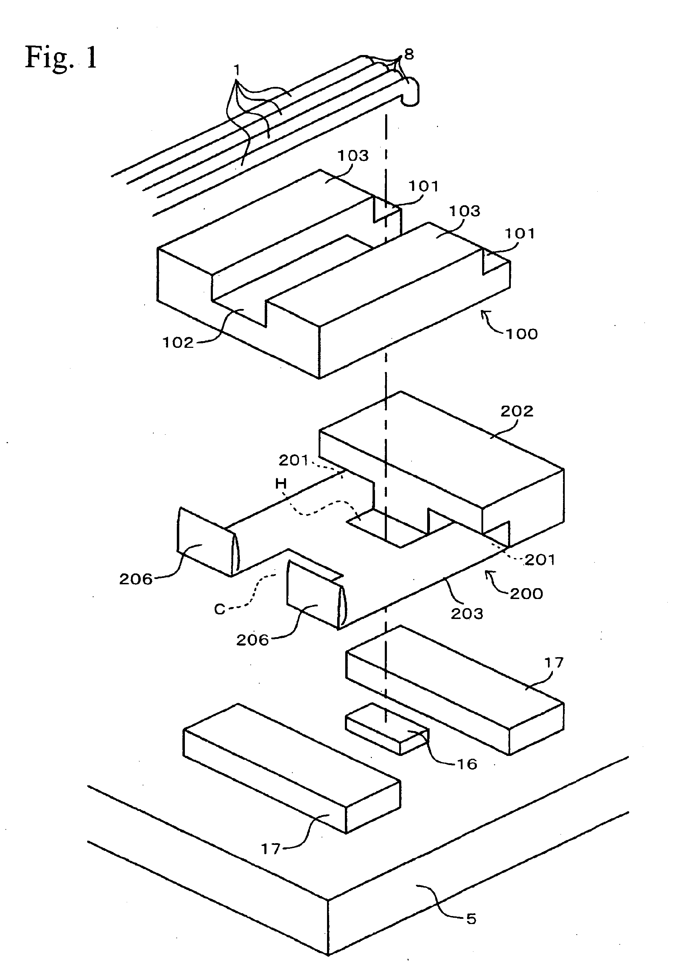

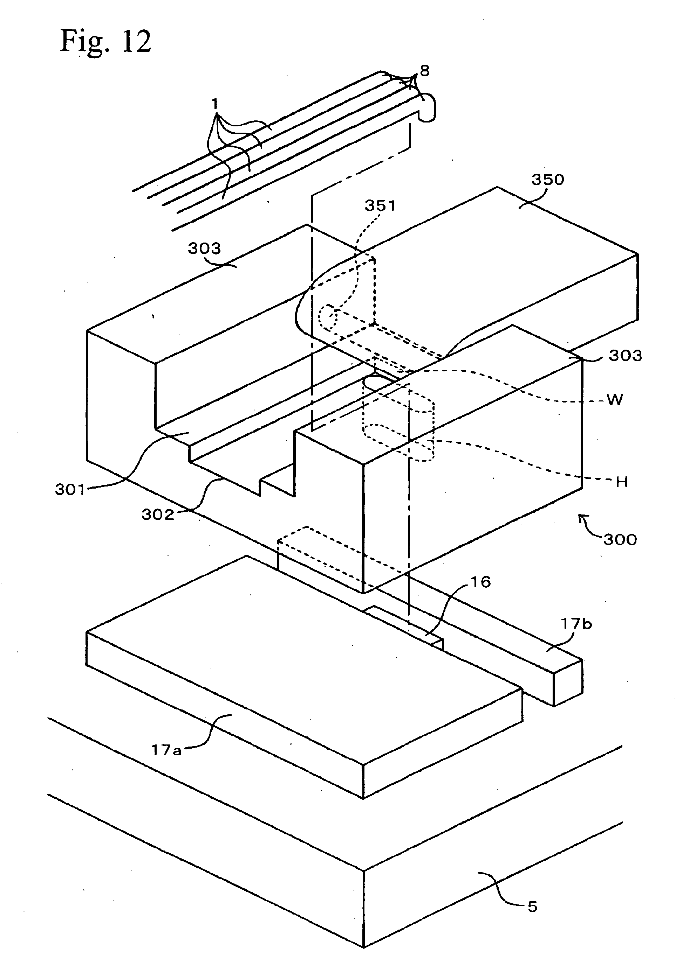

It should be noted that optical connecting parts in the following embodiments means, for example, a combination of a connecting member having convex part 100 and a connecting member having concave part 200 shown in Fig. 1, and optical connecting parts 300 shown in Fig. 12 for example, and that an optical connecting structure is a structure in which an optical transmission medium 1 and an optical functional part 16 are connected by using the optical connecting parts, or the like, in Figs. 1 and 12, for example. It also should be noted that the following optical fiber is explained as an example of the optical transmission medium.

### Embodiment 1

First, the optical connecting parts and the optical connecting structure made thereof in Embodiment 1 are explained with reference to Figs. 1 to 3.

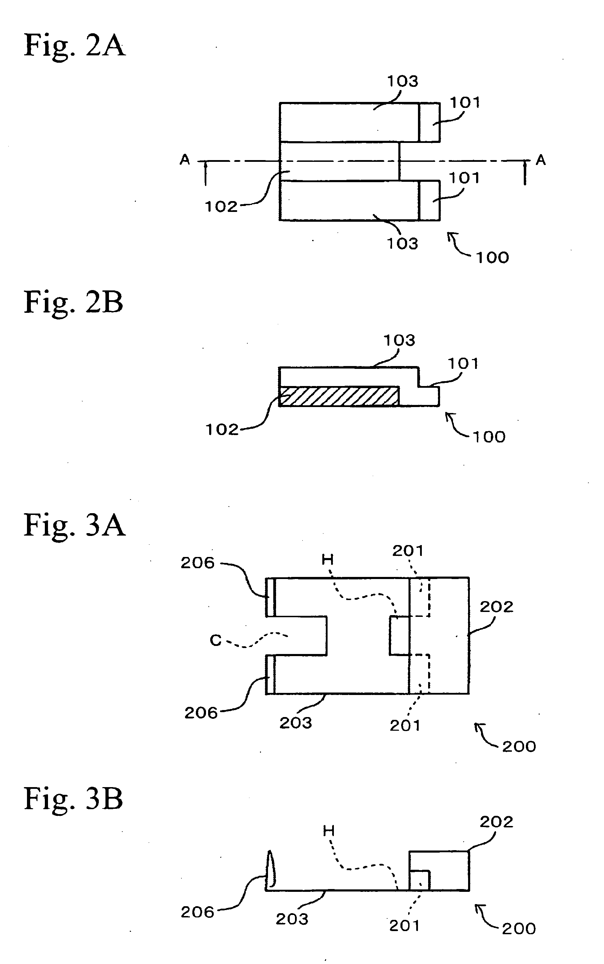

Fig. 1 is an exploded perspective view of the optical connecting structure of Embodiment 1; Fig. 2 is a drawing showing the connecting member having a convex part of Embodiment 1, Fig. 2A is a plane view, and Fig. 2B is a cross sectional view cut by the line A-A; and Fig. 3 is a drawing showing the connecting member having a concave part of Embodiment 1, Fig. 3A is a plane view, and Fig. 3B is a side view.

Reference numeral 1 is an optical transmission medium such as an optical fiber, 5 is a substrate, 8 is a bent part, 16 is an optical functional part such as surface-emitting laser, 17 is a base, 100 is a connecting member having convex part, 101 is a convex part, 102 is a holding part holding the optical transmission medium 1, 103 is a hill part, 200 is a connecting member having concave part, 201 is a concave part, 202 is a projecting part, 203 is a plate part, 206 is a pressing part, C is a cutout part, and H is an aligning part aligning with the optical functional part. The connecting member having convex part 100 and the connecting member having concave part 200 form the optical connecting parts of the present invention.

In the optical connecting structure of Embodiment 1, the optical transmission medium 1 and the optical functional part 16 are vertically connected by using the optical connecting parts consisting of the connecting member having a convex part and the connecting member having a concave part.

The optical transmission medium 1 is not limited to an optical fiber of a single core, and it may be a tape core cable in which plural optical fibers are formed into a tape. In that case, as ordinarily performed to inflect direction of traveling of light, the tip can be obliquely cut to change the optical axis depending on reflection deflection by the cut angle. However, as shown in Fig. 1, it is desirable to use the optical transmission medium 1 in which at least one edge of the optical fiber is bent to have bent part 8 since manufacturing would become easier.

One edge of the optical transmission medium is vertically bent, and a point about 0.2 mm from the bent part 8 is cut. After that, the cut surface is polished to obtain the optical transmission medium 1 having the bent part 8. The length from the bent part 8 to the tip is not limited in particular; however, from the viewpoint of saving space, a length of not more than 2 mm is desirable.

It should be noted that the optical transmission medium 1 can have a bent part 8 which is polished smoothly to give reflectivity to the corner, furthermore, the bent part 8 can be polished smoothly and a reflecting material such as a metal can be arranged.

The connecting member having convex part 100 has the convex part 101, the holding part 102, and the hill part 103, it is possible that the optical transmission medium 1 is aligned to the holding part 102 and held using a gap between the holding part 102 and the hill part 103. The optical transmission medium 1 can be simply put on the connecting member having convex part 100; however, it is desirable that they be unified by fixing using an adhesive tape or an adhesive agent.

The connecting member having concave part 200 has the projecting part 202, the plate part 203, and pressing part 206, and the concave part 201 is formed by cutting off a part of the projecting part 202. The concave part 201 is of a size so that it can be engaged with the convex part 101. Furthermore, the plate part 203 has a hole at the center thereof as the aligning part H, and the connecting member having concave part 200 and the optical functional part 16 can be easily aligned by aligning the aligning part H against the optical functional part 16. A part of the pressing part 206 is cut off to form the cutout part C, the optical transmission medium 1 can be arranged therethrough. It should be noted that a plate having cutout part C can also be used instead of the pressing part 206.

It is desirable that the connecting member having concave part 200 be fixed on the base 17 by adhesive agent or the like.

By attaching the optical functional part 16 on the substrate 5, the optical functional part 16 would have an optical axis vertical to the substrate 5.

The base 17 is a foundation on which the connecting member having concave part 200 is disposed, and the base 17 is formed around the optical functional part 16. The optical functional part 16 and the base 17 can be made of a conventionally known material such as plastics, metals, ceramics or the like.

The connecting member having convex part 100 and the connecting member having concave part 200 can be removably attached by engaging the convex part 101 and the concave part 201.

It should be noted that a shape of the convex part 101 and the concave part 201 is not limited to the shape shown in the figures, and any shape can be used as long as they can be engaged with each other.

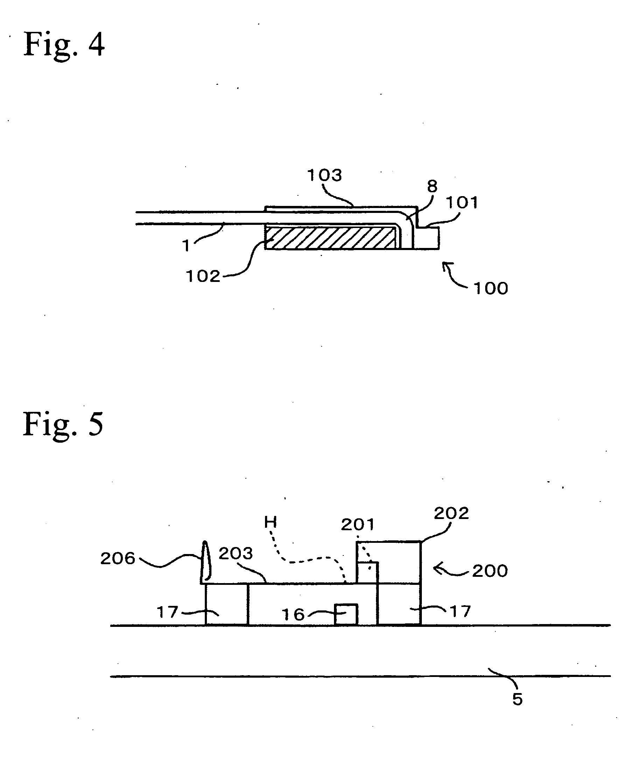

Next, the process for production of the optical connecting structure of the Embodiment 1 is explained with reference to the Figs. 4 to 6.

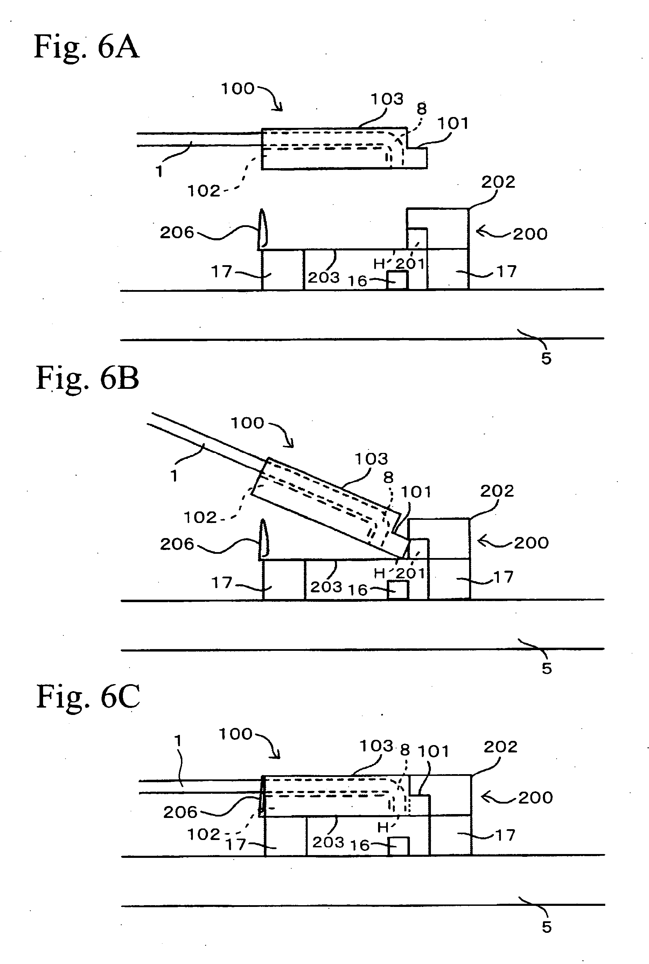

Fig. 4 is a cross sectional view showing a situation in which the connecting member having a convex part of Embodiment 1 holds the optical transmission medium, Fig. 5 is a side view showing a situation in which the connecting member having a concave part of Embodiment 1 and the optical functional member are aligned, and Fig. 6 is a side view showing a process of unifying the connecting member having a convex part and the connecting member having a concave part of Embodiment 1, Fig. 6A is a drawing before unifying, Fig. 6B is a drawing during unifying, and Fig. 6C is a drawing after unifying.

First, as shown in Fig. 4, by putting the optical transmission medium 1 on the holding part 102 of the connecting member having convex part 100, the optical transmission medium is held by the connecting member having convex part 100.

Next, as shown in Fig. 5, by putting the connecting member having concave part 200 on the base 17 by bringing the aligning part H up to the optical functional part 16, the connecting member having concave part 200 and the optical functional part 16 can be aligned.

Furthermore, as shown in Fig. 6, by unifying the connecting member having convex part 100 and the connecting member having concave part 200, the optical connecting structure of Embodiment 1 can be formed.

First, as shown in Fig. 6A, the connecting member having convex part 100 holding the optical transmission medium 1 is brought close to the connecting member having concave part 200 aligned with the optical functional part 16.

Next, as shown in Fig. 6B, the convex part 101 will be engaged with the concave part 201.

Furthermore, as shown in Fig. 6C, the convex part 101 is engaged with the concave part 201 of the connecting member 200. At this time, the pressing part 206 is pressing the connecting member having convex part 100 by its elasticity, and the connecting member having convex part 100 and the connecting member having concave part 200 are unified.

It should be noted that the connecting member having convex part 100 and the connecting member having concave part 200 are attached removably, and therefore, the optical connecting structure can be disconnected by performing the above-described order in reverse.

### Embodiment 2

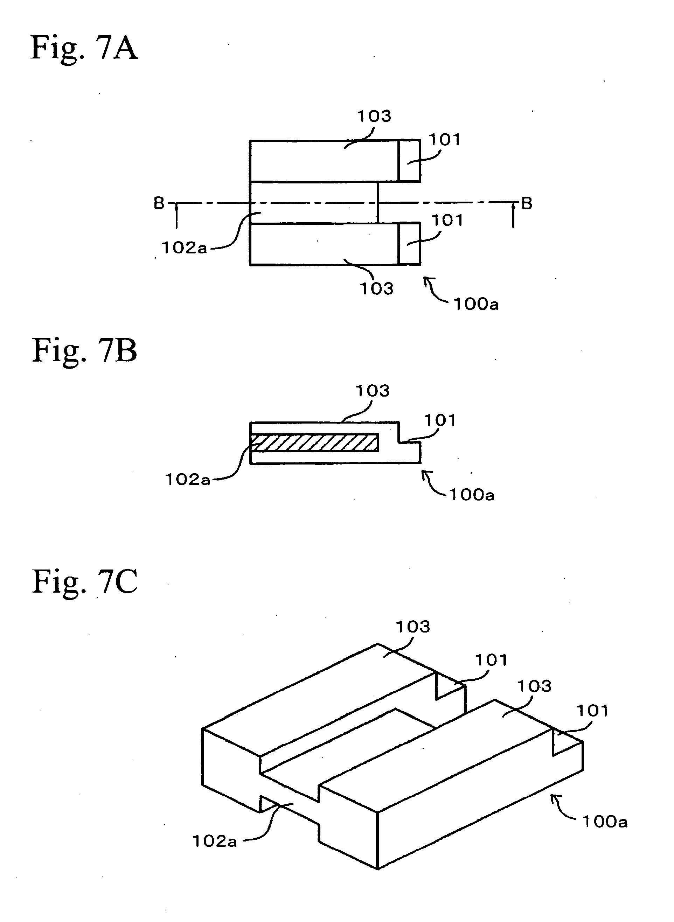

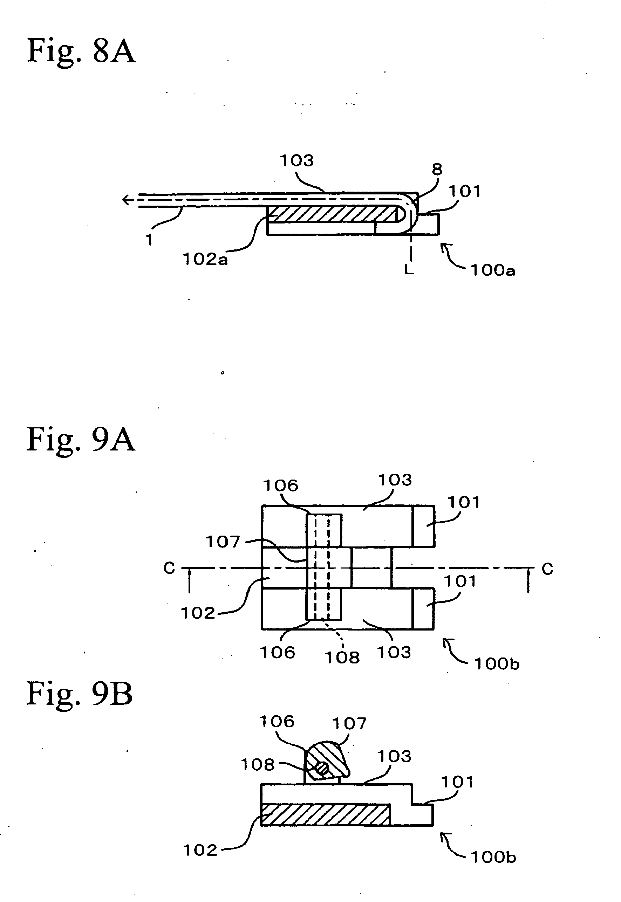

Next, optical connecting parts and an optical connecting structure made thereof of Embodiment 2 are explained with reference to Figs. 7 and 8.

Fig. 7 is a drawing showing a connecting member having a convex part of the Embodiment 2, and Fig. 7A is a plane view, Fig. 7B is a cross sectional view cut by line B-B, and Fig. 7C is a perspective view; and Fig. 8 is a cross sectional view showing a situation in which a connecting member having a convex part of Embodiment 2 is holding an optical transmission medium.

100a is a connecting member having a convex part, and 102a is a holding part.

Embodiment 2 is similar to Embodiment 1 except for the connecting member having a convex part of Embodiment 1 being substituted by the connecting member having convex part 100a and the optical transmission medium 1 is used while being bent 180 degrees.

As shown in Fig. 7, the holding part 102a is supported between the two parts like a bridge, and the optical transmission medium 1 can be hung at the bridge to be brought around it. It is desirable that the shape of the holding part 102a be calculated so that the light coming from the vertical direction can go through the optical transmission medium 1 (that is, go along route L in Fig. 8), when the optical transmission medium 1 is hung around the holding part 102a.

Furthermore, as shown in Fig. 8, by bending one edge of the optical transmission medium 1 at 180 degrees so that the optical transmission medium can be hung around the holding part 102a, the connecting member having convex part 100a can hold the optical transmission medium 1 more strongly.

### Embodiment 3

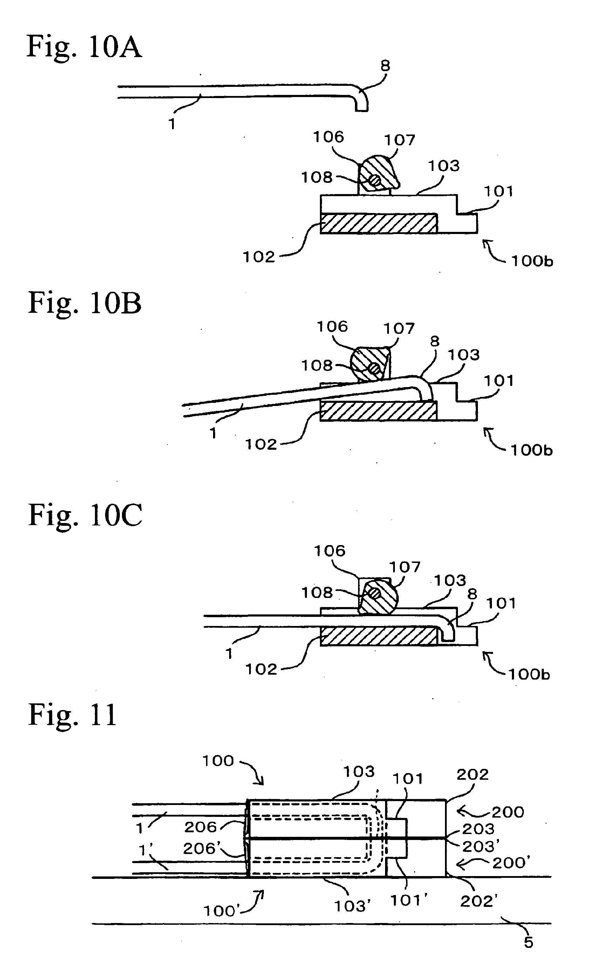

Next, optical connecting parts and an optical connecting structure comprising thereof of Embodiment 3 are explained with reference to Figs. 9 and 10.

Fig. 9 is a drawing showing a connecting member having a convex part of the Embodiment 3, and Fig. 9A is a plane view, and Fig. 9B is a cross sectional view cut by line C-C; and Fig. 10 is a cross sectional view showing a process of the connecting member having a convex part of Embodiment 3 holding the optical transmission medium, Fig. 10A is a drawing before holding, Fig. 10B is a drawing during holding, and Fig. 10C is a drawing after holding.

100b is a connecting member having a convex part, 106 is an axis receiving part, 107 is an eccentric cam, and 108 is a revolution axis.

Embodiment 3 is similar to Embodiment 1 except for the connecting member having convex part 100 of Embodiment 1 being substituted by the connecting member having convex part 100b.

As shown in Fig. 9, the connecting member having convex part 100b has the axis receiving part 106, the eccentric cam 107, and the revolution axis 108.

The eccentric cam 107 is rotatable around the revolution axis 108, to form the eccentric cam structure.

As shown in Fig. 10, the connecting member having convex part 100b can hold the optical transmission medium 1.

That is, first, as shown in 10A, the optical transmission medium 1 is brought close to the connecting member having convex part 100b.

Next, as shown in Fig. 10B, the optical transmission medium 1 is inserted while rotating the eccentric cam 107.

Furthermore, as shown in Fig. 10C, the optical transmission medium 1 is put on the holding part 102. In this time, since the eccentric cam 107 presses the optical transmission medium 1 against the holding part 102, the optical transmission medium 1 never drops out.

It should be noted that the optical transmission medium 1 and the connecting member having convex part 100b are attached removably, and therefore, the connection can be disconnected by performing the above-described order in reverse.

### Embodiment 4

Next, optical connecting parts and an optical connecting structure made thereof of Embodiment 4 are explained with reference to Fig. 11.

Fig. 11 is a side view of the optical connecting structure of Embodiment 4.

1' is another optical transmission medium, 100' is a connecting member having a convex part, 101' is a convex part, 103' is a hill part, 200' is a connecting member having concave part, 202' is a projecting part, 203' is a plate part, and 206' is a pressing part. The connecting member having convex part 100 and the connecting member having concave part 200 form the optical connecting parts and the connecting member having convex part 100' and the connecting part having concave part 200' form the optical connecting parts.

Embodiment 4 is similar to Embodiment 1 except for the optical functional part 16 and the base 17 of Embodiment 1 are substituted by other optical transmission medium 1', the connecting member having convex part 100' and the connecting member having concave part 200'.

That is, Embodiment 4 is an optical connecting structure in a vertical direction in which the optical transmission medium 1 and other optical transmission medium 1' are connected by overlapping the two optical connecting members, (100 + 200) and (100' + 200'), via the plate parts 203 and 203'.

The other optical transmission medium 1' is held in advance by the connecting member having convex part 100', to unify with the connecting member having concave part 200', and it is arranged on the substrate 5 in a condition such that the connecting member having concave part 200' is on the upper side.

Furthermore, the connecting member having concave part 200 is aligned and arranged on the connecting member having concave part 200', and by unifying the connecting member having convex part 100 holding the optical transmission medium 1, the optical transmission mediums can be mutually vertically connected.

### Embodiment 5

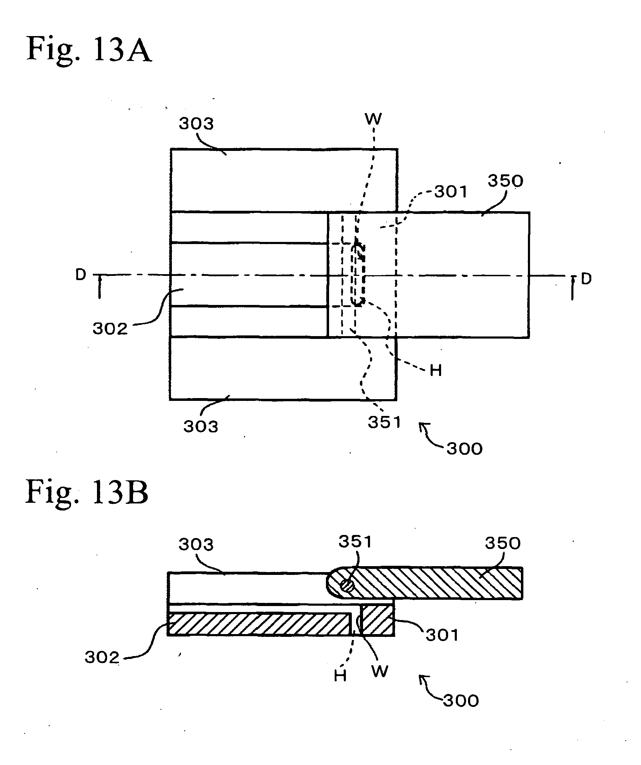

First, optical connecting parts and an optical connecting structure made thereof of Embodiment 5 are explained with reference to Figs. 12 and 13.

Fig. 12 is an exploded perspective view showing the optical connecting structure of Embodiment 5, and Fig. 13 is a drawing showing the optical connecting parts of Embodiment 5, Fig. 13A is a plane view, and Fig. 13B is a cross sectional view cut by line C-C.

Reference numeral 1 is an optical transmission medium such as optical fiber or the like, 5 is a substrate, 8 is a bent part, 16 is an optical functional part such as surface-emitting laser, 17a and 17b are bases, 300 is optical connecting parts, 301 is a shoulder part, 302 is a holding part holding the optical transmission medium 1, 303 is a hill part, 350 is a lid arranged on the hill part 303 and is rotatable as an eccentric cam around a revolution axis 351, 351 is the revolution axis, H is an aligning part aligning with the optical functional part, and W is a wall for pressing.

The optical connecting structure of Embodiment 5 connects the optical transmission medium 1 and the optical functional part 16 in a vertical direction by using the optical connecting parts 300.

The optical transmission medium 1 is not limited to an optical fiber of a single core, and a tape core cable in which plural optical fibers are made into tape can be used. In that case, as is ordinarily performed to inflect direction of traveling of light, the tip can be obliquely cut, without arranging a bent part, to change the optical axis depending on reflection deflection by the cut angle. However, as shown in Fig. 12, it is desirable to use the optical transmission medium 1 in which at least one edge of the optical fiber is bent to have bent part 8, since manufacturing would become easier.

One edge of the optical transmission medium is vertically bent, and a point about 0.2 mm from the bent part 8 is cut. After that, the cut surface is polished to obtain the optical transmission medium 1 having the bent part 8. The length from the bent part 8 to the tip is not limited in particular; however, from the viewpoint of saving space, a length not more than 2 mm is desirable.

It should be noted that the optical transmission medium 1 can have a bent part 8 whose corner is polished smoothly to give reflectivity to the corner, and furthermore, the bent part 8 can be polished smoothly and a reflecting material such as metal can be arranged.

The optical connecting parts 300 have the shoulder part 301, the holding part 302, hill part 303, and the lid 350. The shoulder part 301 is surrounding the holding part 302 with the shape of the letter "Π", and by using a gap between the shoulder part 301 and the holding part 302, the optical transmission medium 1 can be held by the holding part 302. The back of the holding part 302 is contacting with the wall for pressing W, which is a part of the shoulder part 301. A penetrating hole, which downwardly penetrates the holding part 302, is formed as the aligning part H, below the wall for pressing W.

By arranging so that the optical functional part 16 can be seen through the aligning part H, alignment of the optical connecting parts 300 and the optical functional part 16 can be easily performed.

The lid 350 is arranged on the hill part 303 rotatably by the revolution axis 351, during the opening condition of the lid, the optical transmission medium 1 can be inserted into the aligning part H, and during the closing condition of the lid, the optical transmission medium 1 can be held.

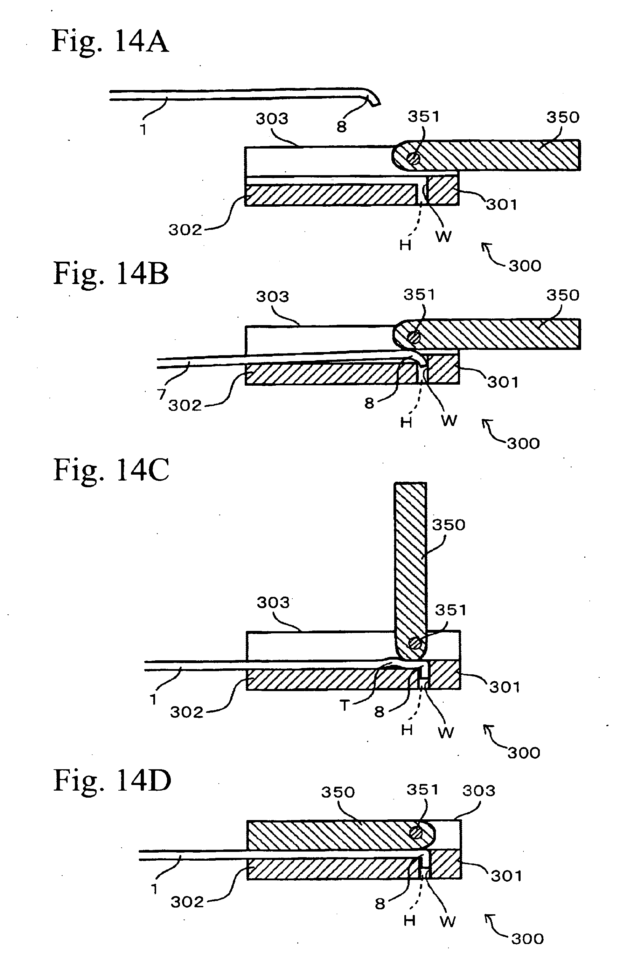

The lid 350, the revolution axis 351 and the hill part 303 construct the pressing device which aligns the optical transmission medium 1 with the aligning part by pressing the optical transmission medium 1 against the wall for pressing W. The details will be explained below with reference to Fig. 14.

It is desirable that the lid 350, the revolution axis 351 and the hill part 303 form the eccentric cam structure.

By opening and closing the lid 350, the optical connecting parts 300 can removably hold the optical transmission medium 1.

By attaching the optical functional part 16 on the substrate 5, it will have an optical axis vertical to the substrate.

The bases 17a and 17b are the base for placing the optical connecting parts 300 thereon, and they are partly formed in the side of the optical functional part 16. The optical functional part 16, the bases 17a and 17b can be made of plastics, metals, ceramics or other conventionally known materials.

By arranging the optical connecting parts 300 holding the optical transmission medium 1 on the bases 17a and 17b, the optical connecting structure of Embodiment 5 is formed.

It may be sufficient for the optical connecting parts 300 to be merely placed on the bases 17a and 17b, but it is desirable for it to be fixed to the bases 17a and 17b by an adhesive agent.

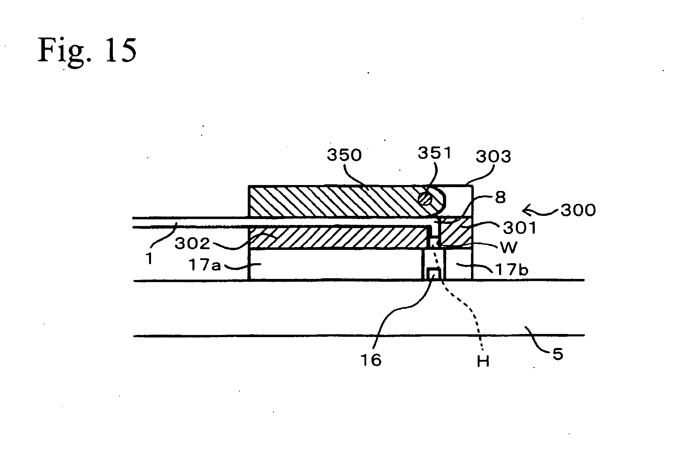

Next, a process for production of the optical connecting structure of Embodiment 5 is explained with reference to Figs. 14 and 15.

Fig. 14 is a cross sectional view showing a process in which the optical connecting parts of Embodiment 5 holds the optical transmission medium, Fig. 14A is a drawing before holding, Fig. 14B is a drawing showing a condition of inserting the optical transmission medium, Fig. 14C is a drawing showing a condition of closing the lid, and Fig. 14D is a drawing showing a condition in which the optical transmission medium is held, and Fig. 15 is a drawing showing a condition in which the optical connecting parts of Embodiment 5 are arranged on the base.

T is a bowing part of the optical transmission medium 1.

First, as shown in Fig. 14A, the optical transmission medium 1 is brought close to the optical connecting parts 300 in a condition in which the lid 350 is open.

Next, as shown in Fig. 14B, the optical transmission medium 1 is inserted along the holding part 302, and the tip of the optical transmission medium reaches to the aligning part H.

Furthermore, as shown in Fig. 14C, the lid 350 is revolved around the revolution axis 351. In this process, the tip of the lid 350 presses the optical transmission medium 1 against the holding part 302, the optical transmission medium 1 is dragged depending on the revolution, and the optical transmission medium is slightly pushed to a direction of the wall for pressing W. By this process, the bent part 8 of the optical transmission medium 1 is pressed against the wall for pressing W, the tip of the optical transmission medium 1 is deeply inserted into the aligning part H, and the optical transmission medium 1 is aligned with the aligning part H.

Furthermore, in this case, the optical transmission medium 1 can be shaped along the shape of a groove. That is, as shown in Fig. 14C, the optical transmission medium 1 can be shaped so that the bent part is almost vertical and the tip of the optical transmission medium is directed directly downwardly.

It should be noted that, as shown in Fig. 14C, the bowing part T may be generated, due to the elasticity of the optical transmission medium 1, by the tip of the lid 350 pressing the optical transmission medium 1.

However, as shown in Fig. 14D, the optical transmission medium 1 can be held, while the bowing part is being shaped as flat, by further revolving the lid 350 to form the closed condition.

As explained above, the optical transmission medium 1 can be held in a condition in which the tip of the optical transmission medium 1 is directed to the optical functional part 16 without having a bowing part.

Since the tip of the optical transmission medium 1 is deeply inserted into the aligning part H, and since the upper part is closed by the lid 350, it will not fall off.

It should be noted that the optical transmission medium 1 and the optical connecting parts 300 are attached removably by opening and closing of the lid 350, and therefore, the connection can be disconnected by performing the above-described order in reverse.

Next, as shown in Fig. 15, by fixing the optical connecting parts 300 holding the optical transmission medium 1 on the bases 17a and 17b arranged on the substrate 5, with an adhesive agent or the like, the optical transmission medium 1 and the optical functional part 16 are aligned, to form the optical connecting structure of Embodiment 5.

The direction of the connection is vertical to the optical axis of linear part of the optical transmission medium 1. That is, connection is completed in a vertical direction to the substrate 5.

It should be noted that the order of the processes can be reversed so that the optical connecting parts 300 are arranged on the bases 17a and 17b first and the optical transmission medium 1 is held by the optical connecting parts 300 next.

That is, first, aligning is performed so that the optical functional part 16 can be seen through the aligning part H of the optical connecting parts 300, and then, the optical connecting parts 300 are fixed on the bases 17a and 17b with an adhesive agent or the like.

Next, the optical transmission medium 1 is inserted along the holding part 302 of the optical connecting parts 300 so that the tip reaches to the aligning part H.

After that, by revolving the lid 350 to be closed, the bent part 8 can be pressed against the wall for pressing W while the optical transmission medium 1 is pressed against the holding part 302. Since the tip of the optical transmission medium 1 is deeply inserted into the aligning part H, the optical transmission medium 1 can be aligned to the aligning part H. In addition, the optical transmission medium 1 can be shaped along the shape of the groove.

As explained above, the optical connecting structure of the Embodiment 5 can be formed.

### Embodiment 6

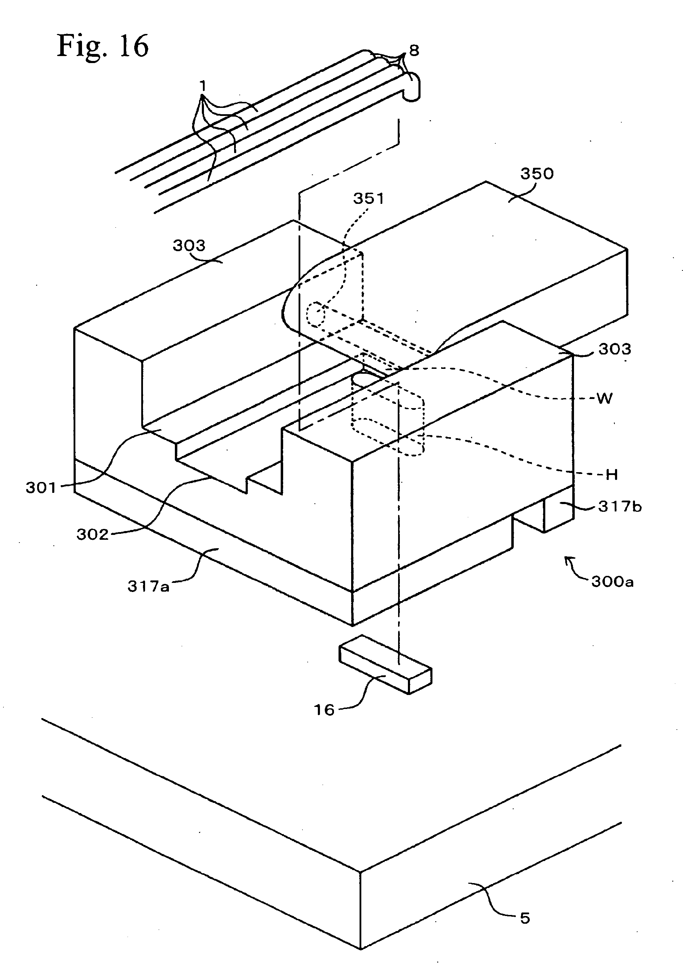

Next, optical connecting parts and an optical connecting structure made thereof of Embodiment 6 are explained with reference to Fig. 16.

Fig. 16 is an exploded perspective view showing the optical connecting structure of Embodiment 6.

Reference numeral 300a is optical connecting parts, and 317a and 317b are base parts. It should be noted that detailed explanation is omitted since the rest of the structure is similar to that of Embodiment 5.

Embodiment 6 is similar to Embodiment 5 except for the optical connecting parts 300 of Embodiment 5 being substituted by the optical connecting parts 300a, and the bases 17a and 17b are removed.

That is, as shown in Fig. 16, since the base parts 317a and 317b are arranged on the optical connecting parts 300, it is not necessary that the base be arranged on the substrate 5.

In Embodiment 6, by unifying the optical connecting parts 300 and the base, the number of parts required for the optical connecting structure is reduced, and the cost can be reduced.

### Embodiment 7

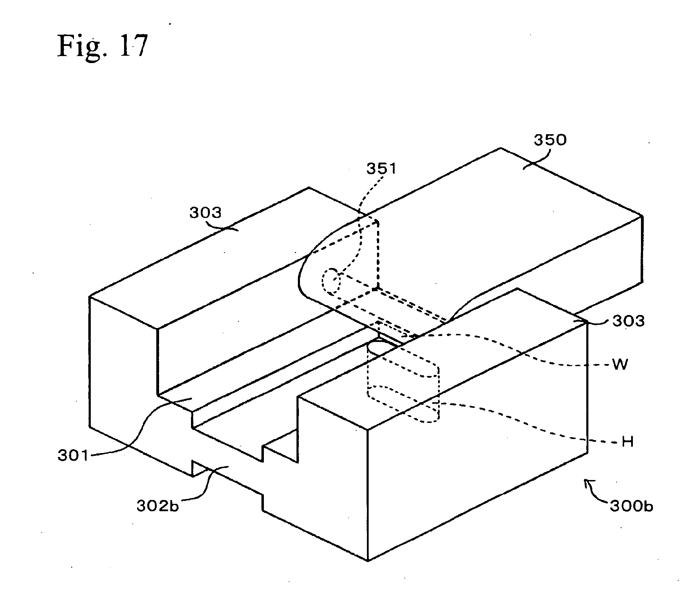

Next, optical connecting parts and an optical connecting structure made thereof of Embodiment 7 are explained with reference to Figs. 17 to 19.

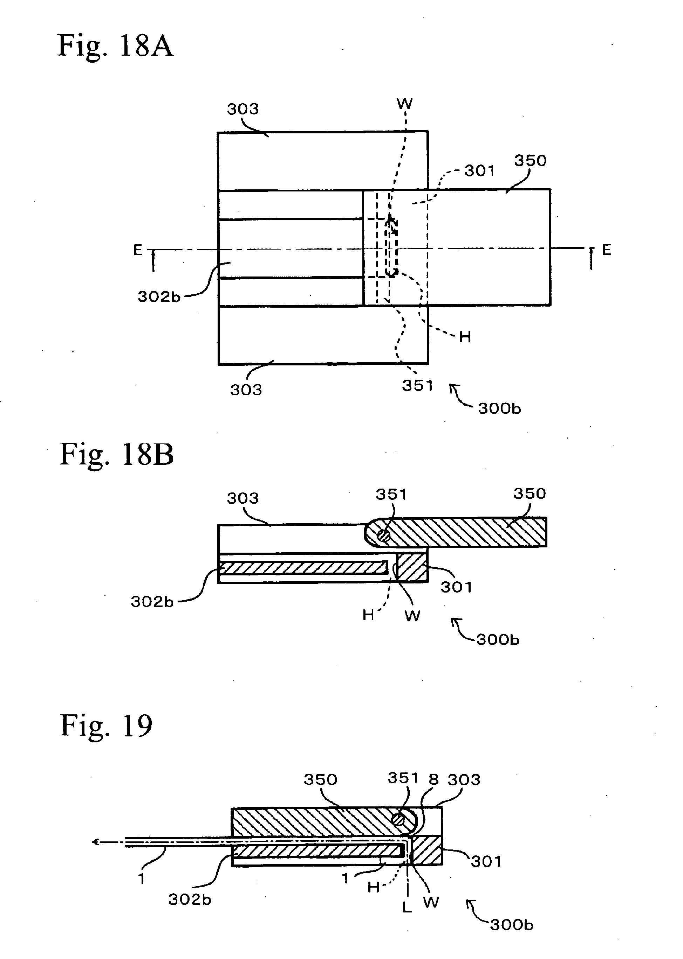

Fig. 17 is a perspective view showing the optical connecting parts of Embodiment 7, and Fig. 18 is a drawing showing the optical connecting parts of Embodiment 7, Fig. 18A is a plane view, Fig. 18B is a cross sectional view cut by line E-E, and Fig. 19 is a cross sectional view showing the condition in which the optical transmission medium is held by the optical connecting parts of Embodiment 7.

Reference numeral 300b is optical connecting parts, 302b is a holding part, and L is light.

Embodiment 7 is similar to that of Embodiment 5 except for the optical connecting parts 300 of Embodiment 5 being substituted by the optical connecting parts 300b, and the optical transmission medium 1 is bent by 180 degrees.

As shown in Figs. 17 and 18, the holding part 302b is supported between the two parts like a bridge, and the optical transmission medium 1 can be hung at the bridge so as to surround it. It is desirable that the shape of the holding part 302b be set positioning so that the light coming from the vertical direction can pass through the optical transmission medium 1 (that is, pass along route L in Fig. 19), when the optical transmission medium 1 is hung around the holding part 302b.

Furthermore, as shown in Fig. 19, by bending one edge of the optical transmission medium 1 by 180 degrees so that the optical transmission medium can be hung around the holding part 302b, the optical connecting parts 300b can hold the optical transmission medium 1 more strongly.

### Embodiment 8

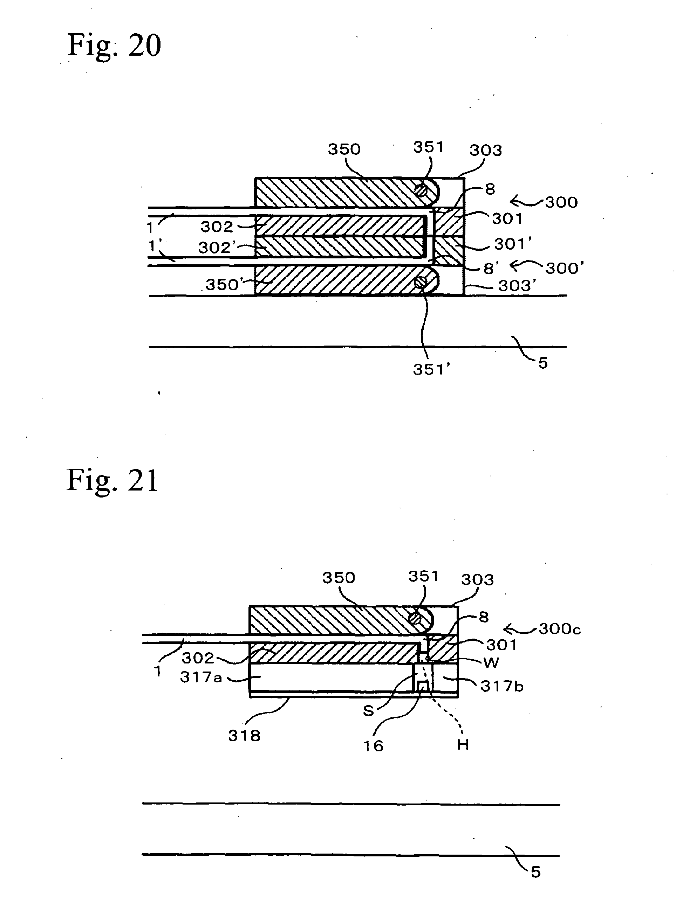

Next, optical connecting parts and an optical connecting structure made thereof of Embodiment 8 are explained with reference to Fig. 20.

Fig. 20 is a cross sectional view showing the optical connecting structure of Embodiment 8.

Reference numeral 1' is an optical transmission medium, 8' is a bent part, 300' is an optical connecting parts, 301' is a shoulder part, 302' is a holding part, 303' is a hill part, 350' is a lid, and 351' is a revolution axis.

Embodiment 8 is similar to Embodiment 5 except for the optical functional part 16 and the bases 17a and 17b of Embodiment 5 are substituted by other optical transmission medium 1' and the optical connecting parts 300'.

That is, Embodiment 8 is an optical connecting structure in the vertical direction, in which two optical connecting parts, 300 and 300', are overlapped via holding parts 302 and 302', to connect the optical transmission medium 1 and the other optical transmission medium 1'.

The other optical transmission medium 1' is held in advance by the optical connecting parts 300', and it is arranged on the substrate 5 in a condition in which the holding part 302' is at the upper side.

Furthermore, the optical transmission medium 1 is held by the optical connecting parts 300 and is aligned on the optical connecting parts 300' so as to vertically and mutually connect the optical transmission mediums.

### Embodiment 9

Next, optical connecting parts and an optical connecting structure made thereof of Embodiment 9 are explained with reference to Fig. 21.

Fig. 21 is a cross sectional view showing the optical connecting structure of Embodiment 9.

Reference numeral 1 is an optical transmission medium, 8 is a bent part, 300 is an optical connecting parts, 301 is an shoulder part, 302 is a holding part, 303 is a hill part, 318 is a bottom plate, 350 is a lid, 351 is a revolution axis, and S is a housing part.

Embodiment 9 is similar to Embodiment 5 except for the optical connecting parts 300 of Embodiment 5 being substituted by the optical connecting parts 300c having the base parts 317a and 317b, and the bottom plate 318.

The housing part S is formed by arranging the bottom plate 318 under the base parts, and the optical functional part 16 can be contained in the housing part S. In this way, the optical connecting parts 300c those are unified in advance with the optical functional part 16 can be obtained.

### Embodiment 10

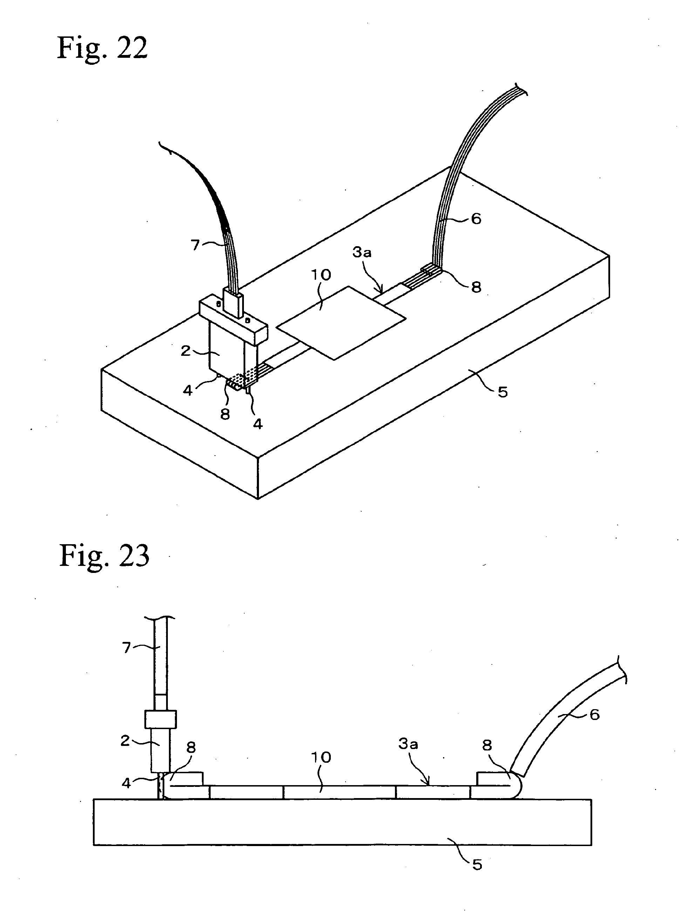

Embodiment 10 is explained with reference to Figs. 22 to 25.

Fig. 22 is a perspective view showing the optical connecting structure of Embodiment 10, and Fig. 23 is a front view showing the optical connecting structure of Embodiment 10.

Reference numeral 7 is a tape core cable having four cores in a multimode optical fiber, which is another optical transmission medium which is connected, 2 is a MT connector attached on the tip of the tape core cable 1, 3a is an optical transmission medium arranged on the printed circuit board 5, 4 is a guide pin for the MT connector arranged on the printed circuit board 5, 5 is the printed circuit board, and 6 is a plastic optical fiber having a diameter of 0.5 mm for example, which is another optical transmission medium which is connected. Reference numeral 8 is a bent part in which both edges of the optical transmission medium 3a are bent at 180 degrees, and 10 is a mending tape.

The optical transmission medium 3a consists of an optical fiber core cable, and both edges are bent at 180 degrees to form the bent part 8. The MT connector 2 is fixed by the guide pin 4 in a condition such that the tip is contacted to the bent part 8.

The plastic optical fiber 6 is fixed by an adhesive agent or the like in a condition such that the tip is contacted to the bent part 8.

The optical connecting structure of Embodiment 10 has a structure as explained above, and the tape core cable 7 and the plastic optical fiber 6 are connected via the optical transmission medium 3a.

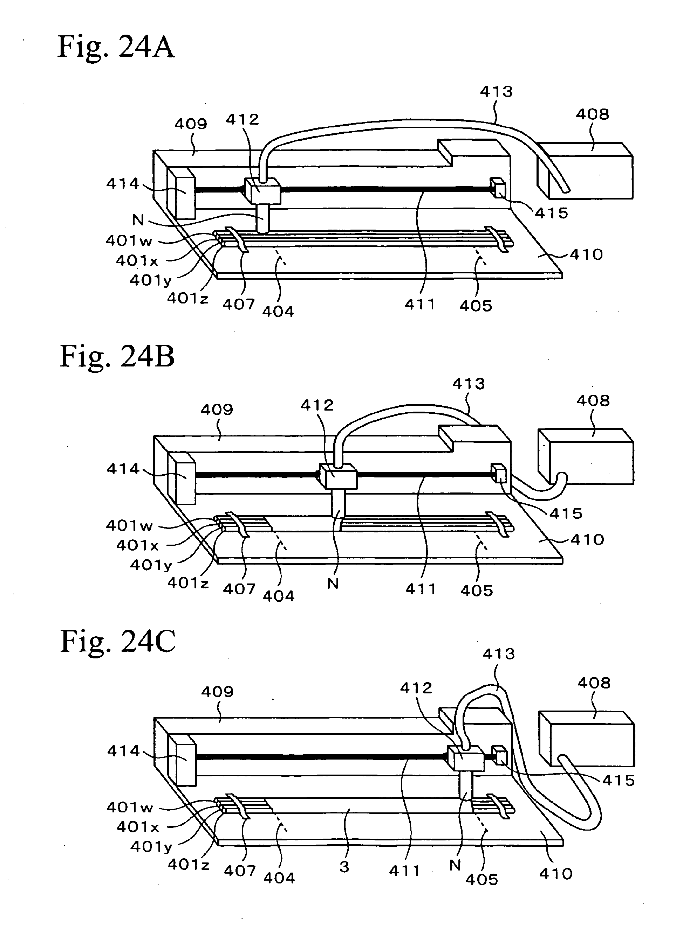

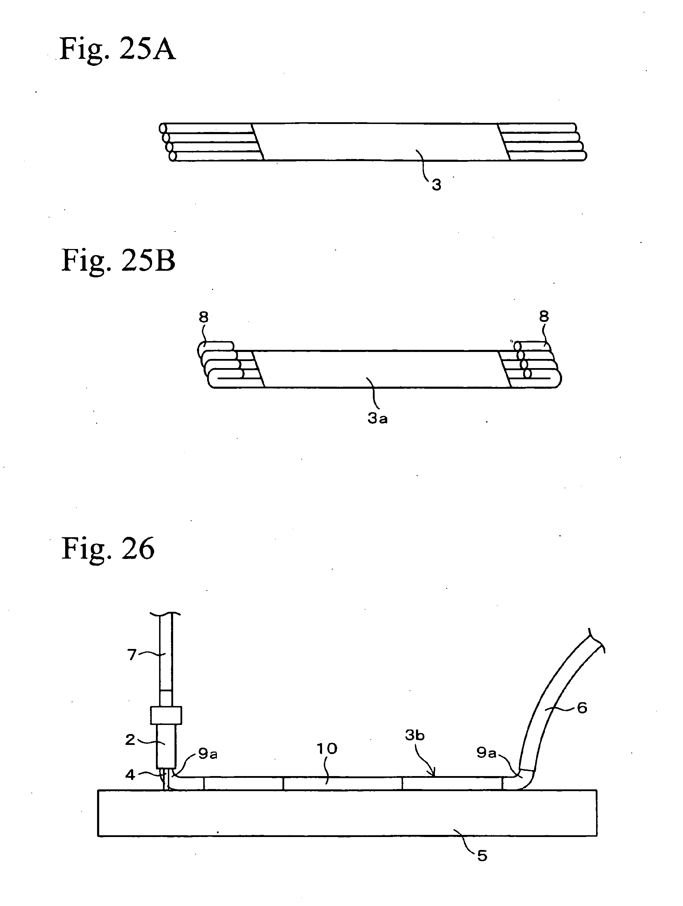

Next, a process for production of the optical connecting structure of Embodiment 10 is explained with reference to Figs. 24 and 25.

Fig. 24 is a perspective view showing an example of a device for making an optical fiber core cable into a tape, and Fig. 25 is a perspective view showing a process for production of the optical transmission medium used in the optical connecting structure of Embodiment 10, Fig. 25A is a drawing showing the optical fiber core cable made into a tape, and Fig. 25B is a drawing showing the optical transmission medium which is a bent optical fiber core cable.

Reference numeral 3 is an optical fiber core cable made into a tape, 401w to 401z are optical fiber core cables, 404 is a start point of a coating material, 405 is an end point of a coating material, 407 is an adhesive tape, 408 is a dispenser, 409 is a one-axis control robot, 410 is a substrate on which the optical fiber is placed, 411 is a ball screw axis, 412 is a movable unit, 413 is a flexible pipe, 414 is a driving motor, 415 is an axis receiving part, and N is a nozzle.

First, the optical fiber core cable made into tape 3 is obtained by forming the four plastic optical fiber core cables into a tape, using the taping device shown in Fig. 24A.

The taping device consists of the one-axis control robot 409 and a material supplying device such as the dispenser 408 which supplies coating material to the nozzle. The one-axis control robot 409 has a substrate on which the optical fiber core cable is placed, the ball screw axis 411 is arranged along its longitudinal direction, the driving motor 414 is arranged at one end, the other end part is supported by the axis receiving part 415, the movable unit 412 is screwed together with the ball screw, and the movable unit 412 holds the nozzle N vertical against the stage surface. In the movable unit 412, the nozzle N can move along the up-down direction and the left-right direction, and it can be fixed at a certain position. Furthermore, the flexible pipe 413 is connected to the nozzle N, and the coating material is supplied therethrough from the dispenser 408. As the nozzle N, a dispenser needle made of stainless steel is desirable.

First, four optical fiber core cables 401w to 401z are aligned in parallel on the substrate 410 along the line at which the movable unit 412 of the one-axis control robot 409 moves, and both end parts of the optical fiber which would not be coated are fixed by the adhesive tape 407 to apply a predetermined tension to each optical fiber core cable.

It should be noted that an adhesive sheet is placed on the substrate and the optical fiber core cable can be adhered thereon instead of using the adhesive tape 407.

Thermosetting silicone rubber resin may be used as the coating material, and the dispenser 408 is used as the material-supplying device to supply the coating material to the nozzle.

Next, by controlling the movable unit 412 of the one-axis control robot 409, the nozzle N is moved to the start point of coating material 404 of the aligned four optical fiber core cables 401w to 401z (Fig. 24A).

By adjusting the movable unit 412 of the one-axis control robot 409 so that the center of nozzle N is brought to the center of the four optical fiber core cables 401w to 401z, and gap between the optical fiber core cable and the tip of the nozzle is set.

Next, the moving speed of the movable unit 412 of the one-axis control robot 409 and discharging pressure of the dispenser 408 are set. By starting the moving of the nozzle N in a direction of the axis of the optical fibers and starting the discharging of the coating material 403, the coating material is coated on the optical fiber core cables 401w to 401z (Fig. 24B).

After moving to the end point of coating material 405, discharging of the coated material is stopped (Fig. 24C).

After that, it is allowed to stand for 1 hour at room temperature to harden the coated material, and this yields the optical fiber core cable formed into tape 3 (regarding details of this tape-producing process, see Japanese Unexamined Patent Application Publications No. 2004-045937 and No. 2004-163634).

It should be noted that another device and process can be employed to coat and harden the coating material; however, by using the taping device shown in Fig. 24, the coating material can be discharged at constant pressure while moving the nozzle N, the yield is preferable since the material required to coat can be precisely discharged, and the cost of the coating material can be preferably reduced.

Furthermore, by bending both edges of the optical fiber core cable made into tape 3 at 180 degrees, the optical transmission medium 3a is produced, as shown in Fig. 25B.

Next, the optical transmission medium 3a is arranged on the printed circuit board 5 in which two holes are formed in advance, and the guide pin 4 is inserted therein so as to be fixed.

In this case, the tip of the bent part 8 is aligned with the middle of the guide pin 4, and the optical transmission medium 3a is fixed on the printed circuit board 5 by the mending tape 10 or the like so that the bent optical fiber core cable is on the upper side.

After that, the MT connector 2 and the guide pin 4 on the printed circuit board 5 are aligned, the optical transmission medium 3a is optically connected in a condition such that the MT connector 2 presses the optical transmission medium 3a as shown in Figs. 22 and 23.

Furthermore, the plastic optical fiber 6 is optically connected to the other edge of the optical transmission medium 3a by fixing with an adhesive agent or the like.

In this Embodiment, by merely making the optical fibers into a tape and then bending, the optical transmission medium 3a, which is a so-called "vertically changing of optical path", can be easily obtained, and the optical connecting structure using this can be produced.

### Embodiment 11

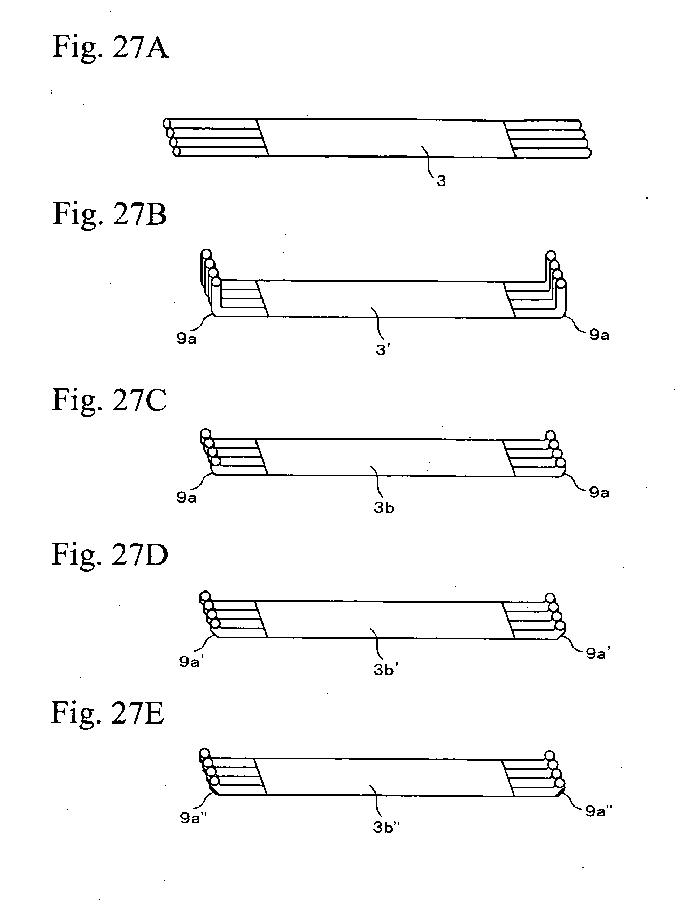

Next, Embodiment 11 is explained with reference to Figs. 26 and 27.

Fig. 26 is a front view showing the optical connecting structure of Embodiment 11.

Reference numeral 3b is an optical transmission medium, and 9a is a bent part.

Embodiment 11 is similar to Embodiment 10 except for the optical transmission medium 3a being substituted by the optical transmission medium 3b.

In the optical transmission medium 3b, both edges are bent at 90 degrees and are cut off to form the bent part 9a.

The MT connector 2 is fixed by the guide pin 4 in a condition such that the tip is contacted to the bent part 9a.

The plastic optical fiber 6 is fixed by the adhesive agent or the like in a condition such that the tip is contacted to the bent part 9a.

In the optical connecting structure of Embodiment 11, the tape core cable 7 and plastic optical fiber 6 are connected via the optical transmission medium 3b.

Next, a process for production of the optical connecting structure of Embodiment 11 is explained.

Fig. 27 is a perspective view showing the process for production of the optical fiber core cable used in the optical connecting structure of Embodiment 11, Fig. 27A is a drawing showing an optical fiber core cable made into a tape, Fig. 27B is a drawing showing the optical transmission medium being bent, Fig. 27C is a drawing showing the optical transmission medium whose bent tip is cut off, and Figs. 27D and 27E are drawings showing other optical transmission mediums.

Reference numeral 3' is an optical fiber core cable whose both edges are bent at 90 degrees, 3b' and 3b" are other optical transmission mediums, 9a' is a bent part whose arc part is smoothly polished, and 9a" is a bent part whose arc part is smoothly polished and on which a reflecting material is arranged.

First, in a manner similar to that of Embodiment 10, four plastic optical fibers are formed into a tape to obtain the optical fiber core cable made into tape 3.

Furthermore, both edges of the optical fiber core cable 3 are bent at 90 degrees (Fig. 27B), and a point about 0.2 mm from the bent part 9a is cut off (Fig. 27C). After that, the cut surface is polished to produce the optical transmission medium 3b of Embodiment 11. The length from the bent part 9a to the tip is not limited in particular; however, from the viewpoint of reducing space, not more than 2 mm is desirable.

It should be noted that the optical transmission medium 3b', in which an arc part is polished flat and a bent part 9a' is formed, can be used instead of the optical transmission medium 3b as shown in Fig. 27D. Furthermore, as shown in Fig. 27E, the optical transmission medium 3b", in which an arc part is polished flat and a reflecting material such as a metal is arranged and the bent part 9a" is formed, can be used.

Next, the optical transmission medium 3b is arranged on the printed circuit board 5 in which two holes are formed in advance, and the guide pin 4 is inserted therein so as to be fixed.

In this case, the tip of the bent part 9a is aligned with the middle of the guide pin 4, and the optical transmission medium 3b is fixed on the printed circuit board 5 by the mending tape 10 or the like so that the tip is at the upper side.

After that, the MT connector 2 and the guide pin 4 on the printed circuit board 5 are aligned, and the optical transmission medium 3b is optically connected in a condition such that the MT connector 2 presses the optical transmission medium 3b, as shown in Fig. 26.

Furthermore, the plastic optical fiber 6 is optically connected to the other edge of the optical transmission medium 3b by fixing with an adhesive agent or the like.

In this Embodiment, by merely forming the plastic optical fibers into a tape and then bending, the optical transmission medium 3b, which is a so-called "vertically changing of optical path" can be easily obtained, and an optical connecting structure using this can be produced. By using the optical transmission medium 3b whose bent tip is cut off, the space in the height direction can be reduced.

### Embodiment 12

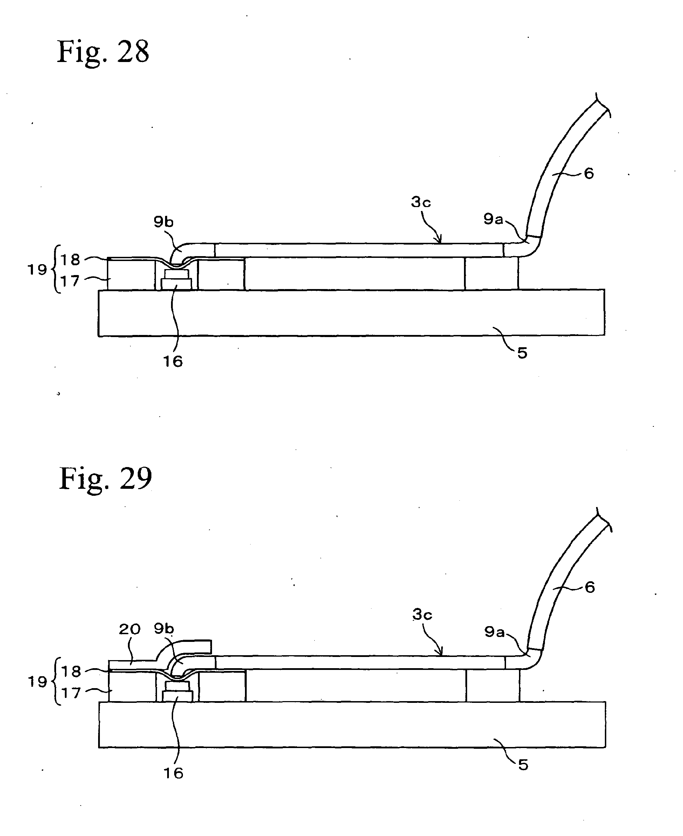

Next, Embodiment 12 is explained with reference to Fig. 28.

Fig. 28 is a front view showing the optical connecting structure of Embodiment 12.

Reference numeral 3c is an optical transmission medium, 9b is a bent part which is bent in a direction different from the direction of bent part 9a, 16 is a surface emitting laser which is an optical functional part which is connected, 17 is a base made of polyphenol sulfide resin, 18 is a polyimide film, 19 is a protecting part including the base 17 and the polyimide film 18.

In the optical fiber core cable 3c, which is the optical transmission medium, both edges are bent in mutually different directions and the tips are cut off to form the bent parts 9a and 9b.

By attaching the surface emitting laser 16 on the printed circuit board 5, the surface emitting laser will have an optical axis that is vertical to the substrate.

The base 17 is formed around the surface emitting laser 16, and the polyimide film 18 is formed being bridged on the base 17. Therefore, the polyimide film 18 covers over the surface emitting laser 16 and protects it. It should be noted that a hole through which the laser passes may be formed in the polyimide film 18.

The bent part 9b is aligned so that it can receive light from the surface emitting laser 16, via the polyimide film 18, or without the polyimide film 18. The bent part 9b, the polyimide film 18, and the surface emitting laser 18 can be constructed in mutually contacted condition or in a non-contact condition.

The optical transmission medium 3c is arranged on the printed circuit board 5, and it is adjusted to the height of the base 17.

The plastic optical fiber 6 is fixed by an adhesive agent or the like in a condition such that the tip is contacted to the bent part 9a.

The optical connecting structure of Embodiment 12 has a structure as explained above, and the surface emitting laser 16 and the plastic optical fiber 6 are connected via the optical transmission medium 3c.

It should be noted that the process for production of the optical connecting structure of Embodiment 12 is similar to that of Embodiment 10, except for the optical transmission medium 3c, the surface emitting laser 16, base 17, and polyimide film 18.

The optical transmission medium 3c is produced in a manner similar to that of the optical transmission medium 3b of Embodiment 10 except for both edges being bent in mutually different directions.

As the surface emitting laser 16, the base 17, and the polyimide 18, conventionally known ones can be used. The protecting part 19 in which the base 17 and the polyimide film 18 are unified can be used.

### Embodiment 13

Next, Embodiment 13 is explained with reference to Fig. 29.

Fig. 29 is a front view showing the optical connecting structure of Embodiment 13.

Reference numeral 20 is an aligning part having a curved surface that fits along the shape of the bent part 9b.

The optical connecting structure of Embodiment 13 is similar to that of Embodiment 12, except for the arrangement of the aligning part 20.

By arranging the aligning part 20 with the protecting part 19, as shown in Fig. 29, the aligning of the optical transmission medium 3c can be performed merely by contacting with the aligning part 20, and the connecting operation becomes easier.

Next, materials constructing the present invention are explained below.

Plastic fiber or the like can be used as the optical transmission medium of the present invention, this is merely an example of the optical fiber which can be easily processed, and therefore, the material is not limited as long as it can be processed by heat or other processing method.

The refractive index distribution of the material can be a step distribution, a graded distribution or the like, and the material is selected depending on its purpose of use. In addition, the number of optical transmission mediums connected at one time is not limited in particular, and therefore, the number of the optical fiber core cables used in the optical connecting structure of an Embodiment in the present invention is not limited. Furthermore, instead of the optical fiber, a flexible optical-waveguide of a polymer can also be used to construct a similar optical connecting structure (optical transmission medium). Preferably, a polymer type material such as a polyimide, acryl, epoxide, polyolefin or the like can be used.

Each material of the base, the base part, the connecting member having convex part 100, the connecting member having concave part 200, the optical connecting parts 300, 300a, and 300b, and the aligning part 20 in the present invention is selected depending on the material of the optical transmission medium which is connected and on the accuracy required in alignment, and in particular, materials made of plastics having low size change by heat, ceramics, metal or the like are preferably used. As the plastic material, a crystalline polymer such as a glass-mixed epoxy material, PPS (polyphenyl sulfide), PEEK (polyetheretherketone) or the like is preferably used.

In the case in which the base, the base part, the connecting member having convex part 100, the connecting member having concave part 200, and the optical connecting parts 300, 300a, and 300b of the present invention are made of a metal such as brass, phosphor bronze, stainless steel, nickel or the like, the holding member, the printed circuit board, the metallic position fixing member, or the holding fixing member can be fixed by soldering. Therefore, in the case in which the optical transmission medium such as the optical fiber is pulled out on the substrate or from the substrate, the optical transmission medium can be connected in a process similar to that of mounting an electronic device.

In addition, as in a situation in which a metal is used for the plate part 203 of the connecting member having concave part 200 and plastic is used for the other part, or as in a situation in which metal is used for the base parts 317a and 317b of the optical connecting parts 300a and plastic is used for the other part, different materials can be used as the situation demands.

Furthermore, a refractive index adjusting material can be inserted between the optical transmission medium and the optical functional part such as the surface emitting laser of the like, in each Embodiment. The refractive index adjusting material is selected and used depending on the environment in which the optical connecting structure of the present invention is to be used or depending on the processes of production. It should be noted that the refractive index adjusting material can be a liquid or a solid, and for example, an oil-type, grease-type, gel-type, or film-type can be used.

### EXAMPLES

### Example 1

As Example 1, the optical connecting structure of the above-described Embodiment 1 was produced (Figs. 1 to 6).

First, four plastic optical fiber core cables (outer diameter: 250 µm, trade name: ESKA, produced by Mitsubishi Rayon Co., Ltd.) were made into a tape to form an optical transmission medium 1.

The producing jig shown in Japanese Unexamined Patent Application Publication No. 2006-203140 was used to produce the optical transmission medium 1.

A needle (inner diameter: 1 mm, produced by Musashi Engineering Inc.) was used as the nozzle.

An adhesive sheet in which an adhesive layer having a thickness of 25 µm was formed on polyethylene terephthalate film (total thickness: 50 µm) was arranged on a substrate.

UV curable resin (trade name: BISCOTACK PM-654, produced by Osaka Organic Chemical Industry Ltd.) was used as the coating material, and a dispenser was used as the material supplying device.

Practically, first, the four optical fiber core cables having lengths of 2.1 m are aligned in parallel on the PET adhesive sheet arranged on the substrate and were then adhered.

Next, the needle hole was brought close to an upper area of one edge of the aligned four optical fiber core cables, and the center of the needle hole was adjusted to approach the center of the four optical fiber core cables.

At this time, the height of the needle was set at 1 mm from the substrate.

Coating material was discharged by the dispenser while the needle was moved along the direction of the optical fiber axis for 2 m, and the material was coated on the upper surface of the optical fiber core cable.

The material that was coated was hardened by a UV treatment (intensity of irradiation: 20 mW/cm², 10 sec) by the UV irradiating device, to obtain the optical transmission medium made into a tape.

One edge of the optical transmission medium was bent at 90 degrees so that the linear part had a length of 130 mm, at a point about 0.2 mm from the bent part 8 was cut off, and the cut surface was polished, to obtain the optical transmission medium 1.

The connecting member having convex part 100 was formed by polyetheretherketone resin.

The projecting part 202 of the connecting member having concave part 200 was formed from a polyetheretherketone resin, and the plate part 203 and the pressing part 206 was formed by integral molding by metal. The pressing part 206 had a structure having elasticity by rounding the metal.

The surface emitting laser (4 cores, wavelength: 850 nm, produced by Fuji Xerox) was used as the optical functional part 16, and a base produced by polyphenol sulfide resin was used as the base 17.

First, the optical transmission medium 1 was placed on the holding part 102 of the connecting member having convex part 100, and then it was held by adhesive tape.

Next, the aligning part H and the optical functional part 16 were aligned, and the connecting member having concave part 200 was fixed on the base by using an adhesive agent.

Furthermore, the connecting member having convex part 100 and the connecting member having concave part 200 were unified to form the optical connecting structure of Example 1.

Laser light having a wavelength of 850 nm was introduced from the surface emitting laser, and output of scattered light was confirmed at the tip of the optical transmission medium 1.

It should be noted that the insertion loss which is a comparison of output power and input power of light was about 11 dB. It is sufficient in practice as an optical connecting structure connecting over a short distance.

### Example 2

As Example 2, the optical connecting structure of the above-described Embodiment 2 was produced (Figs. 7 and 8).

The optical connecting structure of Example 2 is similar to that of Example 1, except for the connecting member having convex part 100 being substituted by the connecting member having convex part 100a and the optical transmission medium 1 used being bent at 180 degrees.

That is, similarly as described above, one end of the optical transmission medium is bent at 180 degrees so that the length of the linear part is 130 mm, forming the optical connecting structure in a way as shown in Fig. 8.

Laser light having a wavelength of 850 nm was introduced from the surface emitting laser, and the output of scattered light was confirmed at the tip of the optical transmission medium 1.

It should be noted that the insertion loss, which is a comparison of output power and input power of light, was about 11 dB. It is sufficient in practice as an optical connecting structure connecting a short distance.

### Example 3

As Example 3, the optical connecting structure of the above-described Embodiment 3 was produced (Figs. 9 and 10).

The optical connecting structure of Example 3 is similar to that of Example 1, except for the connecting member having convex part 100 being substituted by the connecting member having convex part 100b.

A metal was used for the axis receiving part 106, the eccentric cam 107, and the revolving axis 108.

Laser light having a wavelength of 850 nm was introduced from the surface emitting laser, and output of scattered light was confirmed at the tip of the optical transmission medium 1.

It should be noted that the insertion loss, which is a comparison of output power and input power of light, was about 12 dB. It is sufficient in practice as an optical connecting structure connecting a short distance.

### Example 4

As Example 4, the optical connecting structure of the above-described Embodiment 4 was produced (Fig. 11).

Laser light having a wavelength of 850 nm was introduced from the surface emitting laser, and output of scattered light was confirmed at the tip of the optical transmission medium 1'.

It should be noted that the insertion loss, which is a comparison of output power and input power of light, was about 4 dB. It is sufficient in practice as an optical connecting structure connecting a short distance.

### Example 5

As Example 5, the optical connecting structure of the above-described Embodiment 5 was produced (Figs. 12 to 15).

First, four plastic optical fiber core cables (outer diameter: 250 µm, trade name: ESKA, produced by Mitsubishi Rayon Co., Ltd.) were made into a tape to form optical transmission medium 1.

The producing jig shown in Japanese Unexamined Patent Application Publication No. 2006-203140 was used to produce the optical transmission medium 1.

A needle (inner diameter: 1 mm, produced by Musashi Engineering Inc.) was used as the nozzle.

An adhesive sheet in which an adhesive layer having a thickness of 25 µm was formed on polyethylene terephthalate (PET) film (total thickness: 50 µm) and was arranged on a substrate.

UV curable resin (trade name: BISCOTACK PM-654, produced by Osaka Organic Chemical Industry Ltd.) was used as the coating material, and a dispenser was used as the material supplying device.

Practically, first, the four optical fiber core cables having a length of 2.1 m are aligned parallel on the PET adhesive sheet arranged on the substrate, and they were then adhered.

Next, a needle hole was brought close to an upper area of one edge of the aligned four optical fiber core cable, and the center of the needle hole was adjusted to approach the center of the four optical fiber core cables.

At this time, the height of the needle was set at 1 mm from the substrate.

Coating material was discharged by the dispenser while the needle was moved along the direction of the optical fiber axis at 2 m, and the material was coated on the upper surface of the optical fiber core cable.

The material that was coated was hardened by UV treatment (intensity of irradiation: 20 mW/cm², 10 sec) by the UV irradiating device, to obtain the optical transmission medium formed into a tape.

One edge of the optical transmission medium was bent at 90 degrees so that the linear part had a length of 130 mm, at a point about 0.2 mm from the bent part 8 was cut off, and the cut surface was polished, to obtain the optical transmission medium 1.

The optical connecting parts 300 was formed using polyetheretherketone resin.

The surface emitting laser (4 cores, wavelength: 850 nm, produced by Fuji Xerox) was used as the optical functional part 16, and a base produced using a polyphenol sulfide resin was used as the bases 17a and 17b.

First, the optical connecting parts 300 was aligned so that the optical functional part 16 can be seen through the aligning part H, and the optical connecting parts 300 was fixed on the bases 17a and 17b by an adhesive agent.

Next, the optical transmission medium 1 was placed along the holding part 302 of the optical connecting parts 300. By closing the lid 350 in a condition such that the bent part 8 was pressed against the wall for pressing W, the optical transmission medium 1 could be held in a condition such that the tip is directed in the direction of the optical functional part 16 and such that there is no bowed part.

As explained above, the optical connecting structure of Example 5 was formed.

Laser light having a wavelength of 850 nm was introduced from the surface emitting laser, and output of scattered light was confirmed at the tip of the optical transmission medium 1.

It should be noted that the insertion loss, which is a comparison of output power and input power of light, was about 8 dB. It is sufficient in practice as an optical connecting structure connecting a short distance.

### Example 6

As Example 6, the optical connecting structure of the above-described Embodiment 6 was produced (Fig. 16).

The optical connecting structure of Example 6 is similar to that of Example 5, except for the optical connecting parts 300 being substituted by the optical connecting parts 300a having base parts 317a and 317b.

As the base parts 317a and 317b, a brass plate for mounting was used.

The brass plate for mounting is a plate material having a projecting part. By making a hole in the optical connecting parts 300, inserting the projecting part therein, and fixing using a thermosetting adhesive agent, the plate was attached to the optical connecting parts 300.

Furthermore, the optical connecting parts 300 was aligned so that the optical functional part 16 can be seen through the aligning part H, and the optical connecting parts 300 was fixed on the substrate 5 by soldering.

Next, the optical transmission medium 1 was placed along the holding part 302 of the optical connecting parts 300. By closing the lid 350 in a condition such that the bent part 8 was pressed against the wall for pressing W, the optical transmission medium 1 could be held in a condition such that the tip is directed to the direction of the optical functional part 16 and such that there is no bowed part.

As explained above, the optical connecting structure of Example 6 was formed.

Laser light having a wavelength of 850 nm was introduced from the surface emitting laser, and output of scattered light was confirmed at the tip of the optical transmission medium 1.

It should be noted that the insertion loss, which is a comparison of output power and input power of light, was about 9 dB. It is sufficient in practice as an optical connecting structure connecting a short distance.

### Example 7

As Example 7, the optical connecting structure of the above-described Embodiment 7 was produced (Figs. 17 to 19).

Example 7 is similar to Example 5, except for the optical connecting parts 300 of Embodiment 5 being substituted by the optical connecting parts 300b and the optical transmission medium 1 being bent at 180 degrees.

That is, one edge of the optical transmission medium produced in a manner similar to that described above, is bent at 180 degrees so that the linear part has a length of 130 mm, to construct the optical connecting structure as shown in Fig. 19.

Laser light having a wavelength of 850 nm was introduced from the surface emitting laser, and output of scattered light was confirmed at the tip of the optical transmission medium 1.

It should be noted that the insertion loss, which is a comparison of output power and input power of light, was about 11 dB. It is sufficient in practice as an optical connecting structure connecting a short distance.

### Example 8

As Example 8, the optical connecting structure of the above-described Embodiment 8 was produced (Fig. 20).

Laser light having a wavelength of 850 nm was introduced from the surface emitting laser, and output of scattered light was confirmed at the tip of the optical transmission medium 1.

It should be noted that the insertion loss, which is a comparison of output power and input power of light, was about 5 dB. It is satisfactory in practice as an optical connecting structure connecting a short distance.

### Example 9

As Example 9, the optical connecting structure of the above-described Embodiment 9 was produced (Fig. 21).

The optical connecting structure of Example 9 is similar to that of Example 5 except for the optical connecting parts 300 of being substituted by the optical connecting parts 300c having the base parts 317a and 317b, and the bottom plate 318.

A brass plate for mounting was used as the bottom plate 318.

The brass plate for mounting is a plate material having a projecting part. By making a hole in the base parts 317a and 317b, inserting the projecting part therein, and fixing by thermosetting adhesive agent, the optical connecting part 300c was produced. Furthermore, the optical connecting part 300c was fixed on a desired place on the substrate by soldering.

Next, the optical transmission medium 1 was placed along the holding part 302 of the optical connecting parts 300c. By closing the lid 350 in a condition such that the bent part 8 was pressed against the wall for pressing W, the optical transmission medium 1 could be held in a condition such that the tip is directed to the direction of the optical functional part 16 and such that there is no bowed part.

As explained above, the optical connecting structure of Example 9 was formed.

Laser light having a wavelength of 850 nm was introduced from the surface emitting laser, and output of scattered light was confirmed at the tip of the optical transmission medium 1.

It should be noted that the insertion loss, which is a comparison of output power and input power of light, was about 8 dB. It is satisfactory in practice as an optical connecting structure connecting a short distance.

### Example 10

As Example 10, the optical connecting structure of the above-described Embodiment 10 was produced (Figs. 22 to 23).

First, four plastic optical fiber core cables (outer diameter: 250 µm, trade name: ESKA, produced by Mitsubishi Rayon Co., Ltd.) were made into a tape to form optical fiber core cable 3.

The producing jig shown in Fig. 24 was used to produce the optical fiber core cable 3.

A needle (inner diameter: 1 mm, produced by Musashi Engineering Inc.) was used as the nozzle.

A PET adhesive sheet having an adhesive layer having a thickness of 25 µm (total thickness: 50 µm) was arranged on a substrate 410.

UV curable resin (trade name: BISCOTACK PM-654, produced by Osaka Organic Chemical Industry Ltd.) was used as the coating material, and the dispenser 408 was used as the material supplying device.

Practically, first, the four optical fiber core cables 401w to 401z having a length of 2.1 m are aligned parallel on the PET adhesive sheet arranged on the substrate, and they were then adhered.

Next, a needle hole was brought close to an upper area of one edge of the aligned four optical fiber core cables 401w to 401z, and the center of the needle hole was adjusted so as to approach the center of the four optical fiber core cables 401w to 401z.

At this time, the height of the needle was set at 1 mm from the substrate.

Coating material was discharged by the dispenser 408 while the needle was moved along the direction of the optical fiber axis by 2 m, and the material was coated on the upper surface of the optical fiber core cables 401w to 401z.

The material which was coated was hardened by UV treatment (intensity of irradiation: 20 mW/cm², 10 sec) by the UV irradiating device to obtain the optical fiber core cables made into tape 3 was obtained.

Both edges of the optical fiber core cables formed into a tape were bent at 180 degrees so that the linear part had a length of 130 mm, to obtain the optical transmission medium 3a shown in Fig. 25B.

Next, two holes having a diameter of 0.69 mm and being separated by 4.6 mm were formed on the printed circuit board 5, and the guide pins 4 were inserted into the holes, and they were fixed and adhered.

The tip of the bent part 8 was aligned with the middle of the guide pin 4, and the optical transmission medium 3a was fixed on the printed circuit board 5 by the mending tape 10 so that the bent part was at the upper side.

After that, the MT connector 2 attached on the tip of the tape core cable 7 and the guide pin 4 on the printed circuit board 5 were aligned, the optical transmission medium 3a was optically connected in a condition such that the MT connector 2 pressed the optical transmission medium 3a, as shown in Figs. 22 and 23.

As the plastic optical fiber 6, one having a diameter of 0.5 mm was used.

Laser light having a wavelength of 650 nm was introduced through the tape core cable 7, and output of red scattered light was confirmed at the plastic optical fiber 6.

It should be noted that the insertion loss, which is a comparison of output power and input power of light, was about 12 dB. It is satisfactory in practice as an optical connecting structure connecting a short distance.

### Example 11

As Example 11, the optical connecting structure of the above-described Embodiment 11 was produced (Fig. 26).

The optical connecting structure of Example 11 has a structure similar to that of Example 10, except for the optical transmission medium 3a being substituted by the optical transmission medium 3b.

Both edges of the optical fiber core cable, formed into tape 3 used above, were bent at 90 degrees so that the linear part had a length of 130 mm, and a point about 0.2 mm from the bent part 9a was cut off (Fig. 27B), and the cut surface was polished, to produce the optical fiber medium 3b of the present Example (Fig. 27C).

Laser light having a wavelength of 650 nm was introduced through the tape core cable 7, and output of red scattered light was confirmed at the plastic optical fiber 6.

It should be noted that the insertion loss, which is a comparison of output power and input power of light, was about 10 dB. It is satisfactory in practice as an optical connecting structure connecting a short distance.

### Example 12

As Example 12, the optical connecting structure of the above-described Embodiment 12 was produced (Fig. 28).

First, both edges of the optical transmission medium 3 produced in Example 10 were bent in a crank shape so that the linear part had a length of 130 mm, a point about 0.2 mm from the bent parts 9a and 9b were cut off, and the cut surface was polished, to produce the optical transmission medium 3c of the present Example.

The surface emitting laser (4 cores, wavelength: 850 nm, produced by Fuji Xerox) was used as a surface emitting laser 16, and a base produced by polyphenol sulfide resin was used as the base 17.

Laser light having a wavelength of 850 nm was introduced from the surface emitting laser, and output of scattered light was confirmed at the plastic optical fiber 6.

It should be noted that the insertion loss, which is a comparison of output power and input power of light, was about 11 dB. It is satisfactory in practice as an optical connecting structure connecting a short distance.

### Example 13

As Example 13, the optical connecting structure of the above-described Embodiment 13 was produced (Fig. 29).

Laser light having a wavelength of 850 nm was introduced from the surface emitting laser, and output of scattered light was confirmed at the plastic optical fiber 6.

It should be noted that the insertion loss, which is a comparison of output power and input power of light, was about 9 dB. It is satisfactory in practice as an optical connecting structure connecting a short distance.

As explained above, by the present invention, optical connecting parts and an optical connecting structure of which a large area is not occupied on the substrate, position aligning is easier, takes less time to connect, and connecting and releasing can be freely performed, can be provided.

In addition, in the present invention, since the number of parts is small, the cost can be reduced.

## Claims

1. Optical connecting parts which connect an optical transmission medium (1) and at least one of an optical functional part (16) and another optical transmission medium (1'), comprising:
a holding part (102, 102a; 302; 302b; 302') for holding the optical transmitting medium, an aligning part (H) with which the at least one of the optical functional part (16) and other optical transmission medium (1') is aligned, a pressing device (106-108; 303, 350, 351) and a pressing wall (W);
**characterized in that** the pressing device (106-108; 303; 350; 351) has a cam structure and presses the optical transmission medium (1) against the pressing wall (W) to align the optical transmission medium (1) to the aligning part (H).

2. Optical connecting parts according to claim 1, wherein a direction of the connection is vertical to the optical axis of the optical transmission medium (1).

3. Optical connecting parts according to claim 1, wherein the pressing device (303, 350, 351) presses the optical transmission medium (1) against the pressing wall (W) to shape the optical transmission medium (1).

4. Optical connecting parts according to one of claims 1 to 3, wherein the optical connecting parts have base parts (17; 17a, 17b; 317a; 317b).

5. Optical connecting parts according to one of claims 1 to 4, wherein the optical connecting parts have a housing part (5) housing at least one of the optical functional part (16) and the other optical transmission medium (1').

6. An optical connecting structure consisting of an optical transmission medium (1) and at least one of optical functional parts (16) and another optical transmission medium (1') mutually connected by using the optical connecting parts according to one of claims 1 to 5.

7. An optical connecting structure formed by connecting an optical transmission medium (1) arranged on a substrate (5) with at least one of an optical functional part (16) and another optical transmission medium (1') using the optical connecting parts according to one of claims 1 to 5, wherein the optical transmission medium (1) has a bent part (8) at least on one edge, and the bent part (8) is connected with at least one of the optical functional part (16) and another optical transmission medium (1').

8. An optical connecting structure according to claim 6, wherein the optical transmission medium (1) has a bent part (8) at least on one edge.

9. An optical connecting structure according to claim 7 or 8, wherein the bent part (8) is formed by bending the optical transmission medium (1) at 180 degrees.

10. An optical connecting structure according to claim 7 or 8, wherein the bent part (8) if formed by bending the optical transmission medium (1) at 90 degrees.

11. An optical connecting structure according to claim 7 or 8, wherein the optical transmission medium (1) has the bent part at both edges.

12. An optical connecting structure according to claim 7, wherein the optical functional part (16) has an optical axis that is vertical to the substrate (5).

## Patentansprüche

1. Optische Verbindungsteile, die ein optisches Übertragungsmedium (1) und wenigstens ein optisch funktionales Teil (16) und/oder ein weiteres optisches Übertragungsmedium (1') verbinden, umfassend:
einen Halteteil (102, 102a; 302; 302b; 302') zum Halten des optischen Übertragungsmediums, einen Ausrichtungsteil (H), mit dem das wenigstens eine optisch funktionale Teil (16) und/oder das andere optische Übertragungsmedium (1') ausgerichtet werden, eine Pressvorrichtung (106-108; 303, 350, 351) und eine Presswand (W);
**dadurch gekennzeichnet, dass** die Pressvorrichtung (106-108; 303; 350; 351) eine Nockenstruktur aufweist und das optische Übertragungsmedium (1) gegen die Presswand (W) drückt, um das optische Übertragungsmedium (1) auf den Ausrichtungsteil (H) auszurichten.

2. Optische Verbindungsteile nach Anspruch 1, wobei eine Richtung der Verbindung vertikal zu der optischen Achse des optischen Übertragungsmediums (1) ist.

3. Optische Verbindungsteile nach Anspruch 1, wobei die Pressvorrichtung (303, 350, 351) das optische Übertragungsmedium (1) gegen die Presswand (W) drückt, um das optische Transmissionsmedium (1) zu formen.

4. Optische Verbindungsteile nach irgendeinem der Ansprüche 1 bis 3, wobei die optischen Verbindungsteile Basisteile (17; 17a, 17b; 317a; 317b) aufweisen.

5. Optische Verbindungsteile nach irgendeinem der Ansprüche 1 bis 4, wobei die optischen Verbindungsteile ein Gehäuseteil (5) aufweisen, das wenigstens das optisch funktionale Teil (16) und/oder das andere optische Übertragungsmedium (1') beherbergen.

6. Optische Verbindungsanordnung, die aus einem optischen Übertragungsmedium (1) und wenigstens optischen funktionalen Teilen (16) und/oder einem weiteren optischen Übertragungsmedium (1') besteht, die unter Verwendung der optischen Verbindungsteile gemäß einem der Ansprüche 1 bis 5 wechselseitig verbunden sind.

7. Optische Verbindungsanordnung, die gebildet ist durch Verbinden eines optischen Übertragungsmediums (1), das auf einem Substrat (5) angeordnet ist, mit wenigstens einem optisch funktionalen Teil (16) und/oder einem weiteren optischen Übertragungsmedium (1') unter Verwendung der optischen Verbindungsteile nach irgendeinem der Ansprüche 1 bis 5, wobei das optische Übertragungsmedium (1) an wenigstens einem Rand einen gebogenen Teil (8) aufweist, wobei der gebogene Teil (8) mit wenigstens dem optisch funktionalen Teil (16) und/oder dem weiteren optischen Übertragungsmedium (1') verbunden ist.

8. Optische Verbindungsanordnung nach Anspruch 6, wobei das optische Übertragungsmedium (1) an wenigstens einem Rand einen gebogenen Teil (8) aufweist.

9. Optische Verbindungsanordnung nach Anspruch 7 oder 8, wobei der gebogene Teil (8) durch Biegen des optischen Übertragungsmediums (1) um 180 Grad gebildet ist.

10. Optische Verbindungsanordnung nach Anspruch 7 oder 8, wobei der gebogene Teil (8) durch Biegen des optischen Übertragungsmediums (1) um 90 Grad gebildet ist.

11. Optische Verbindungsanordnung nach Anspruch 7 oder 8, wobei das optische Übertragungsmedium (1) an beiden Rändern den gebogenen Teil aufweist.

12. Optische Verbindungsanordnung nach Anspruch 7, wobei das optisch funktionale Teil (16) eine optische Achse aufweist, die vertikal zum Substrat (5) ist.

## Revendications

1. Pièces de connexion optique qui connectent un support de transmission optique (1) et au moins un parmi une pièce fonctionnelle optique (16) et un autre support de transmission optique (1'), comprenant :
une pièce de maintien (102, 102a ; 302 ; 302b ; 302') pour maintenir le support de transmission optique, une pièce d'alignement (H) avec laquelle le au moins un parmi la pièce fonctionnelle optique (16) et l'autre support de transmission optique (1') est aligné, un dispositif de pression (106 - 108 ; 303 ; 350 ; 351) et une paroi de pressions (W) ;
**caractérisées en ce que** le dispositif de pression (106 - 108 ; 303 ; 350 ; 351) a une structure à came et presse le support de transmission optique (1) contre la paroi de pression (W) pour aligner le support de transmission optique (1) sur la pièce d'alignement (H).

2. Pièces de connexion optique selon la revendication 1, dans lesquelles une direction de la connexion est verticale par rapport à l'axe optique du support de transmission optique (1).

3. Pièces de connexion optique selon la revendication 1, dans lesquelles le dispositif de pression (303, 350, 351) presse le support de transmission optique (1) contre la paroi de pression (W) pour mettre en forme le support de transmission optique (1).

4. Pièces de connexion optique selon l'une des revendications 1 à 3, dans lesquelles les pièces de connexion optique ont des pièces de base (17 ; 17a, 17b ; 317a ; 317b).

5. Pièces de connexion optique selon l'une des revendications 1 à 4, dans lesquelles les pièces de connexion optique ont une pièce de boîtier (5) logeant au moins un parmi la pièce de fonctionnelle optique (16) et l'autre support de transmission optique (1').

6. Structure de connexion optique constituée d'un support de transmission optique (1) et d'au moins un parmi des pièces fonctionnelles optiques (16) et un autre support de transmission optique (1') mutuellement connectés en utilisant les pièces de connexion optique selon l'une des revendications 1 à 5.

7. Structure de connexion optique formée en connectant un support de transmission optique (1) disposé sur un substrat (5) avec au moins un parmi une pièce fonctionnelle optique (16) et un autre support de transmission optique (1') en utilisant les pièces de connexion optique selon l'une des revendications 1 à 5, dans laquelle le support de transmission optique (1) a une pièce coudée (8) sur au moins un bord, et la pièce coudée (8) est connectée avec au moins un parmi la pièce fonctionnelle optique (16) et l'autre support de transmission optique (1').

8. Structure de connexion optique selon la revendication 6, dans laquelle le support de transmission optique (1) a une pièce coudée (8) sur au moins un bord.

9. Structure de connexion optique selon la revendication 7 ou 8, dans laquelle la pièce coudée (8) est formée en coudant le support de transmission optique (1) à 180 degrés.

10. Structure de connexion optique selon la revendication 7 ou 8, dans laquelle la pièce coudée (8) est formée en coudant le support de transmission optique (1) à 90 degrés.

11. Structure de connexion optique selon la revendication 7 ou 8, dans laquelle le support de transmission optique (1) a la pièce coudée sur les deux bords.

12. Structure de connexion optique selon la revendication 7, dans laquelle la pièce fonctionnelle optique (16) a un axe optique qui est vertical par rapport au substrat (5).
